(19) Europäisches Patentamt / European Patent Office / Office européen des brevets

(11) **EP 3 633 574 A2**

(12) **EUROPEAN PATENT APPLICATION**
published in accordance with Art. 153(4) EPC

(43) Date of publication:
**08.04.2020 Bulletin 2020/15**

(51) Int Cl.:
*G06Q 20/38* (2012.01)    *G06Q 20/06* (2012.01)
*G06Q 20/40* (2012.01)

(21) Application number: **18810840.1**

(22) Date of filing: **01.06.2018**

(86) International application number:
**PCT/JP2018/021181**

(87) International publication number:
**WO 2018/221725 (06.12.2018 Gazette 2018/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2017 JP 2017109308**

(71) Applicant: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(54) **DATA STRUCTURE, TRANSMISSION DEVICE, RECEIVING DEVICE, SETTLEMENT DEVICE, METHOD, AND COMPUTER PROGRAM**

(57)    Provided is a data structure of virtual currency data with high safety. The virtual currency data, which is used in combination with a settlement device that accepts settlement when the virtual currency data is received from a predetermined device via a network and when predetermined conditions are satisfied, includes virtual currency encryption data which is data obtained by, according to a predetermined encryption method, encryption of issue subject information including at least information on an issue subject of the virtual currency data, amount information that is information for specifying a monetary value, and credit information that is information used as a basis for a credit of the virtual currency data.

（A）

| ISSUE SUBJECT INFORMATION | AMOUNT INFORMATION | CREDIT INFORMATION |
|---|---|---|

（B）

| ISSUE SUBJECT INFORMATION | AMOUNT INFORMATION | CREDIT INFORMATION | SERIAL NUMBER INFORMATION | AMOUNT INFORMATION |
|---|---|---|---|---|

FIG. 12

**Description**

**Technical Field**

The present invention relates to a virtual currency (virtual cash).

**Background Art**

In recent years, various proposals related to FinTech have been made, and some of the proposals have already been put into practical use.

Some of the proposals are called virtual currency. For example, Bitcoin (trademark), which began with a thesis published by someone using the name Satoshi Nakamoto and is realized by a system constructed on the Internet, is also generally called a virtual currency. On the other hand, bitcoin is sometimes referred to as cryptocurrency or crypto cash.

First, a structure of bitcoin will be described. Bitcoin is generally established by the following structure.

First, bitcoin is generated as follows.

A person who has the right to generate bitcoins is limited to an administrator who manages nodes to be described below. The node administrator participates in a certain game played on the Internet. The game is repeated, and the node administrator, who has won the game, can obtain a predetermined number of bitcoins every time the administrator wins the game.

The bitcoins generated in this way are transferred to a third party including a person other than the node administrator from the node administrator who obtains the bitcoins, for example, for "payment" in the same manner as general currency, and will be distributed as a result.

By the way, how to prevent double transfer is very important problem in the field of virtual currency or virtual money without being limited to bitcoin. Since general money, which is a tangible object, disappears from the transferor's hands when transferred from the transferor to the transferee, after the transferor transfers the money to the transferee, it is not possible for the transfer to transfer the same money to another transferee in principle. However, since the virtual currency is easy to duplicate and it is possible that the virtual currency as data owned by the transferor is not extinguished even when the transferor transfers the virtual currency to the transferee, it is very easy to transfer the same virtual currency to many people. Unless the same virtual currency can be prevented from being transferred to many people, such virtual currency cannot gain any trust as currency.

Bitcoin intends to solve such a problem of double transfer through a method of preserving all transaction records. The transaction records are as follows, for example. For simplicity, it is assumed that only four persons A to D participate in the structure of bitcoin and the node administrators are only two persons A and B. Assuming that the node administrator A wins the above-described game and gains 1,000 bitcoins, and the node administrator B wins the above-described game and gains 500 bitcoins.

In this state, A to D respectively have bitcoins described as follows.

[Table 1]

| | |
|---|---|
| A | +1000 |
| B | +500 |
| C | 0 |
| D | 0 |

Next, assuming that A has paid 100 bitcoins to C and B has paid 200 bitcoins to D.

In this state, A to D respectively have bitcoins described as follows.

[Table 2]

| | | |
|---|---|---|
| A | +1000 | -100 (to C) |
| B | +500 | -200 (to D) |
| C | 0 | +100 (from A) |
| D | 0 | +200 (from B) |

Next, assuming that A has paid 300 bitcoins to B and D has paid 100 bitcoins to C.

In this state, A to D respectively have bitcoins described as follows.

[Table 3]

| A | +1000 | -100 (to C) | -300 (to B) |
|---|---|---|---|
| B | +500 | -200 (to D) | +300 (from A) |
| C | 0 | +100 (from A) | +100 (from D) |
| D | 0 | +200 (from B) | -100 (to C) |

All of the records indicated in Tables 1 to 3 described above are transaction records. According to the transaction records described above, it can be seen at the time of Table 3 that A has bitcoins of 600 (= +1000 - 100 - 300), B similarly has bitcoins of 600, C has bitcoins of 200, and D has bitcoins of 100.

The bitcoin having such a structure is interesting in that some data as a main body of bitcoin is not delivered from the transferor to the transferee in the transfer of bitcoin between A to D in the example described above. In spite of this, attraction of the bitcoin structure is to specify the current balance of bitcoin of A to D as long as the transaction records exist. Again, in the bitcoin structure, there is no data corresponding to a coin entity, even though a naming of "coin" is used to recall a tangible object.

Noted that the phenomenon that the node administrator in the bitcoin structure wins the game and gains bitcoins can occur after the transaction is advanced to some extent, for example, after the time of Table 3.

In the bitcoin structure, as described above, each participant who participates in the bitcoin structure does not have data corresponding to his/her bitcoin. In other words, even though each participant's wallet is empty, since all past transaction records exist so as to be accessible and the balance of bitcoin at that time is specified in this way from the access record, the bitcoin structure is established based on mutual understanding or common illusion that the bitcoin of each participant should be like this.

For that reason, in order for all participants to believe in the common illusion, it is necessary to guarantee that the transaction record is accurate at any time or the transaction record cannot be falsified.

Bitcoin ensures the guarantee with block chain and the technology and idea of proof-of-work. The transaction records of bitcoin have a structure in which new transaction records are linked to previous transaction records. As new transaction record data (blocks) are continuously linked to the past transaction records, the transaction record data are linked in the form of chain of blocks. This is called a block chain. When a new block added to the block chain is generated, a value obtained by encryption of the previous block (more precisely, a hash value created from the data of the past block) is added to the new block. Thus, if the past block is falsified after the time when the new block is added to the block chain, the hash value is changed and the falsification is detected, and thus the data of the past block created previously cannot be falsified in actual fact.

In addition, blockchain data is recorded in a server called a node, which exists in large numbers on the Internet. The same blockchain data is recorded in each of the nodes. As described above, the administrator of the node is a participant in a certain kind of game described above. A person who can add a new transaction record block to the past transaction record is only a winner of the game described above. That is, when the number of persons, who can add a new block to a node, is limited to only one person, appropriate block data is ensured.

With the structure described above, since the blockchain recorded in each node cannot be falsified by the hash value or the hash value is changed when the falsification is made, the evidence of falsification is detected. Even when some of the blockchains recorded in each node are falsified likewise, including the hash value (for example, even when some of the blockchains recorded in multiple nodes are also falsified) so that the falsification of the past block data is not detected, if a large number of non-falsified blockchains exist out of the blockchains recorded in a large number of nodes, the falsification of the past block data can be made helpless including the hash value by setting this state to true, and the theory of majority rule is adopted in actual bitcoin. As described above, the node administrator can obtain bitcoins as a reward by winning the game. Using the bitcoins as motivation, the node administrators improve computing power of his/her computer. In order for a malicious third party to falsify a majority of the blockchains recorded in the node, it is necessary to prepare a computer having computing power of at least half of the sum of the computing power of many computers of the node administrators. A person who participates in the bitcoin structure trusts that the computer having such computing power cannot be prepared in actual fact. Such trust or confidential relationship guarantees the legitimacy of not only the blockchain but also the transaction record, and gives a certain kind of trust to the bitcoin.

**Summary of Invention**

**Technical Problem**

The structure of bitcoin is as described above, but the inventor of the present invention has big doubts that bitcoin is called virtual currency or bitcoin is even called crypto cash.

This is because, in the structure of bitcoin, a cryptographic technique is only used to guarantee the legitimacy of transaction records. That is, when a new block is added to the blockchain described above, a hash value of the previous block is taken.

Moreover, as described above, there is no data that is delivered from the value transferor to the transferee at the time of transferring the value. This means that currency (banknote or coin) of a tangible object is not used which mediates the transfer of value through the transfer thereof in functioning the currency.

That is, bitcoin may function as currency, but has not entity as money and is also extremely limited in the use of cryptography. The problem with the lack of entity as money is that all of the past transaction records are required to be recorded, resulting in causing great efforts and waste in recording of the large amount of data. Actually, the amount of blockchain data recorded in bitcoin is already enormous, and recording of the enormous blockchain data and recording of the same blockchain data in a large number of nodes cause tremendous waste. On the other hand, when data is circulated among users in replace of money, the safety of the data becomes a problem.

From such a point of view, although being very vague, there is an idea that a cryptographic technique should be utilized to establish virtual currency, and there is a possibility that safe virtual currency, more specifically, safe virtual money can be established using appropriately the cryptographic technique. Bitcoin may be referred to as cryptocurrency or the like, and this is a way to give the user an "image" of safety due to use of cryptography.

In the bitcoin as described above, however, the use of the cryptographic technique is extremely limited.

In a case of exchanging a value called DigiCash or e-cash between users, virtual currency using data in replace of money to be exchanged has existed in the past, and the cryptographic technique has also been used for such virtual currency. However, the cryptographic technique used in such virtual currency merely means that data for authentication indicating the used data is authentic data is encrypted and attached to data having a monetary value.

An object of the present invention is to provide virtual currency that is data created as crypto cash in a true meaning.

## Solution to Problem

In order to solve such a problem, the inventor of the present invention proposes the invention to be described below.

The present invention is to provide data structure of virtual currency data that is data of virtual currency having a monetary value and is used in combination with a settlement device that accepts settlement when the virtual currency data is received from a predetermined device via a network and when predetermined conditions are satisfied.

The data structure of virtual currency data includes virtual currency encryption data which is data obtained by, according to a predetermined encryption method, encryption of plaintext original data that is data including issue subject information including at least information on an issue subject of the virtual currency data and amount information that is information for specifying a monetary value.

The virtual currency data having such a data structure is used in combination with the settlement device that determines whether the settlement is accepted. As will be described below, there are three types of settlement devices, all of which use encryption technology. For example, in the case of the first type of settlement device, depending on whether the virtual currency encryption data included in the virtual currency data can be decrypted, the authenticity of the virtual currency encryption data and the virtual currency data can be determined. Therefore, the safety of such virtual currency data can be improved according to the level of safety of the encryption technology used for it.

The virtual currency data having the above-described data structure has high safety because a main body of its monetary value is encrypted. In addition, since the virtual currency realized by the virtual currency data having the data structure of the present application has virtual currency data to be exchanged at the time of value exchange, the virtual currency has the nature of entity as money, and therefore it is not necessary to record a large number of transaction record data.

In addition, the term "encryption" in the present invention means that the data is converted so that the data cannot be read (not understood) without special knowledge even when a third party looks at the data, and includes not only conversion in which data can be decrypted but also a case of irreversible conversion as in a case of taking a hash value.

The virtual currency data of the present invention includes the virtual currency encryption data as described above. Here, the virtual currency encryption data is obtained by encryption of original data, and the original data includes at least issue subject information and amount information. The original data may include another data.

For example, the original data may include plaintext credit information that is information for supporting the credit of the virtual currency data. In this case, the virtual currency encryption data is obtained by encryption of data including the issue subject information, the amount information, and the credit information.

This improves the credit of the virtual currency data of the present invention.

Money is originated from specie having a value accepted by everyone (for example, corresponding to gold coins and silver coins made of materials having a value accepted by everyone). After that, convertible money (in many cases, convertible paper money) guaranteed to be exchanged with the specie was born, and further inconvertible money (in many cases, inconvertible paper money) having a value guaranteed by the credit subject such as a government and not guaranteed to be exchanged with the specie was born, leading to the current situation. In other words, the value of the current money is guaranteed due to the credit of the government or the like.

On the other hand, for example, bitcoin is given to the winner of the game as described above. Since the value of bitcoin is increasingly accepted at present, bitcoin can be exchanged with legal tender issued by each country. However, bitcoin does not have credit to support its value. For example, the fact that someone won the game does not naturally support its value. Therefore, it is not strange that money such as bitcoin not having the credit to support the value becomes worthless at any time. In fact, the value (for example, the exchange rate against the dollar) of bitcoin may fluctuate by several tens of percent in a short period of time. Such a target that value fluctuation is permitted is a speculation object, but is actually difficult to be called money or currency.

On the other hand, if the above-described credit information is included in the virtual currency encryption data included in the virtual currency data, the value is easily guaranteed. For example, if the country guarantees the value of the virtual currency data, the credit information may be a description or data that guarantees the mandatory currency power of the virtual currency data issued by the country.

The credit information may be information for specifying a predetermined asset that is an origin for credit of the virtual currency data. Such an asset has a character such as deposit or collateral for the virtual currency data, or is collateral or deposit itself. When the virtual currency data is created corresponding to an asset having at least the value to some extent regardless of whether it is the same as the amount of money specified by the amount information, when the virtual currency encryption data included in the virtual currency data includes the information for specifying the asset that is an origin for credit of the virtual currency data, for example, information corresponding to the virtual currency data one to one, and when a rule can be created so that a certain virtual currency data can be exchanged with an asset included in the virtual currency encryption data included in the virtual currency data, the virtual currency data has a character like convertible money and the value thereof is guaranteed at least to some extent.

In the case where the credit information is information for specifying the predetermined asset that is an origin of credit of the virtual currency data, the asset can be an existing asset. The existing asset is, for example, legal tender. Thus, it is possible to make the degree of credit of the virtual currency data equivalent to the legal tender. Naturally, the "existing asset" is not limited thereto and can be valuable "objects" regardless of movable or real properties. Further, the asset may be a tangible object or may be an intangible object. For example, an intangible object such as a patent right can be used as an asset in the credit information, or a bond having a monetary value can be used as the asset described above.

Another example of an asset also includes a buried resource. In some of the buried resources, reserves have been grasped. By using a resource, which is known to be buried and has not yet been mined, as a basis for credit of virtual currency data, the credibility of the virtual currency data can be enhanced. For crude oil or the like, reserves are often grasped for unmined portions. For example, assuming that the above-described asset is heavy oil that can be mined from a certain oil field for one month and, for example, a large number pieces of virtual currency data having credit information associated with the asset is issued by, for example, an owner (for example a country) of the oil field to be a total amount that can be balanced with the asset (price of heavy oil), for example, the stability of the value of the virtual currency data becomes high. Moreover, in such a case, when a problem such as a bank run does not occur, the owner of the oil field can generate virtual currency data without mining the heavy oil. This has an enormous economic impact in terms of raising the monetary value while preventing the resource. Examples of the resources are naturally not limited to the crude oil, and can include fossil fuels such as coal and natural gas, metals including gold, silver, manganese, and other rare metals, gemstones such as diamond, ruby, and others, and nuclear fuels such as uranium and others.

As in the case of the above-described buried resource, the above-described asset as a basis for credit of virtual currency data can include a value that does not yet exist in the world but is scheduled to occur in the future. Such an example includes power that is scheduled to be generated in the future. For example, power scheduled to occur in a specific solar photovoltaic power generation panel for one month in a certain year is used as collateral, which is used as a basis for the credit of the virtual currency data, to issue the virtual currency data, and thus the stability of the value of the virtual currency data can be increased. In addition, the owner of the buried resource is usually a country or a large company. However, since a case where an individual performs power generation using a solar photovoltaic power generation panel or the like is increasing, there is a possibility that a general individual can issue the virtual currency data using the power as an asset used as a basis for the credit of the virtual currency data. This is also applied to the cases of issuing the virtual currency data using, for example, the tangible object and the legal tender as a basis for the credit. That is, according to the present invention, it is possible for a general individual to issue the virtual currency data.

The issue subject information encrypted and included in the data structure of virtual currency data according to the present invention may include information other than an issuer. For example, the issue subject information further includes not only issuer information that is information for specifying an issuer of the virtual currency data but also at least one of: authentication information that is information to guarantee authenticity of the virtual currency data, the information being issued by a person having authority to guarantee the authenticity of the virtual currency data; serial number information that is information unique to each virtual currency data for distinguishing the virtual currency data from other virtual currency data; and timing information that is information for specifying a timing at which the virtual currency data was issued.

Some of types of the information, for example, the authentication information may also serve as the above-described credit information. For example, when the issuer of the virtual currency data is the same as the guarantor of the authenticity, there is a high possibility that the authentication information also serves as the credit information.

In the data structure of virtual currency data according to the present invention, encryption condition information, which is information for specifying a condition when the original data are encrypted, may be further attached. This is particularly useful in virtual currency data used in combination with first and third types of settlement devices to be described below. Note that the encryption condition information may or may not be encrypted.

The data structure of virtual currency data according to the present invention may be further attached with at least a part of the original data in an unencrypted state. As described above, the original data are encrypted and is changed into virtual currency encryption data in the present invention. This makes it possible to increase the safety of the virtual currency data, but to cause inconvenience that the value transferee out of the value transferor and transferee does not know he/she receives how much the amount of money. Such inconvenience can be solved in a manner that a part of the original data, that is, a part of the issue subject information, the amount information, and the credit information is made as readable plaintext data and included in the virtual currency data, for example, is read without being decrypted by a receiving device or a transmission device to be described below.

Naturally, the virtual currency data having the data structure of the virtual currency data described above may be recorded in a recording medium. The recording medium is not limited to a portable recording medium, and may be a recording medium built in a predetermined device. The recording medium built in the predetermined device is, for example, a random access memory (RAM) or a hard disk drive (HDD).

The predetermined device may be a receiving device including a receiving device receiving means receives data via the network, the recording medium described above built therein, and the virtual currency data may be recorded on the recording medium after being received by the receiving device receiving means.

The predetermined device may be a transmission device including a transmission device transmitting means transmits data via the network, the recording medium described above built therein, and the virtual currency data is transmitted to the settlement device via the network by the transmission device transmitting means.

Next, three types of settlement devices will be described. These types of settlement device receive any of the virtual currency data described above and perform settlement under predetermined conditions.

A first settlement device includes: a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a decryption means that decrypts the virtual currency encryption data included in the virtual currency data received by the settlement device receiving means; and a settlement means that, when the virtual currency encryption data is capable of being decrypted with the decryption means, accepts settlement of an amount of money specified by the amount information included in the original data obtained by decryption of the virtual currency encryption data with the decryption means.

The virtual currency data used in combination with the first type of settlement device is the virtual currency data having the data structure of the virtual currency data according to the present invention, and the virtual currency encryption data included therein is limited to encrypted data capable of being decrypted. Upon receiving the virtual currency data, the first settlement device decrypts the virtual currency encryption data included in the virtual currency data. Then, on the condition that the virtual currency data can be decrypted and returned to the original data, the settlement device accepts the settlement of the amount of money specified by the amount information. In this case, the authenticity of the virtual currency data may be authenticated by the issue subject information or the like, the authenticity is proved by the fact that the virtual currency encryption data can be originally decrypted. By setting whether the decryption can be made as an authentication condition, it is possible to increase the accuracy of confirmation of the authenticity of the virtual currency data executed by such a settlement device, and as a result, to increase the safety of the virtual currency data used together with a settlement device executed by such a settlement device. Note that appropriate information such as the issue subject information may be used for confirming legitimacy of the virtual currency encryption data, and this is also applied to second and third types of settlement devices to be described below.

The first type of settlement device includes the decryption means, and decrypts the virtual currency encryption data using the decryption means. Needless to say, a large number of pieces of the virtual currency data exist at the same time, for example, on the network, on the recording medium described above, or in the predetermined device described above. When the encryption method, for example, both a key and an algorithm are always the same, the decryption means of the settlement device can always decrypt the virtual currency encryption data with a combination of one kind of key and algorithm. However, if the safety of the virtual currency data is desired to be increased, it is obvious that at least one of the virtual currency encryption data included in a large number of pieces of virtual currency data, or if possible, all the virtual currency encryption data is preferably encrypted by a method different from that used for other virtual currency encryption data. However, when such a technique is adopted, the decryption means should grasp how to encrypt the virtual currency encryption data to be decrypted. This can be achieved by the encryption condition information described above.

When the settlement device includes means that grasps, from the encryption condition information attached to the virtual currency encryption data to be decrypted by the decryption means, a condition when the virtual currency encryption data was encrypted, the decryption means can know the condition when the virtual currency encryption data is encrypted, and thus there is no inconvenience in decrypting the virtual currency encryption data even if the virtual currency encryption data are respectively encrypted under different conditions. The encryption condition information may or may not be encrypted as described above. The encryption condition information, which is not encrypted, can be used as it is. On the other hand, if the encryption condition information is encrypted, the encryption condition information cannot be used unless being decrypted. Even when the virtual currency encryption data are respectively encrypted under different conditions, the encrypted encryption condition information can be decrypted by a predetermined means of the settlement device, for example, by the decryption means if the encrypting condition of the encryption condition information is equal any time.

The encryption condition information may be the above-described key or algorithm itself used when the virtual currency encryption data is encrypted, or may be information for specifying which key or algorithm is used when the virtual currency encryption data is encrypted. For example, when the virtual currency data is encrypted, the encryption is assumed to be performed with different keys, which are sequentially changed, such as a first key when the first virtual currency data is encrypted, a second key when the second virtual currency data is encrypted, a third key when the third virtual currency data is encrypted, and so on. Then, these keys are assumed to be pseudo-random numbers generated continuously by the following formula, for example. Then, since an N-th pseudo-random number is always the same when an initial value $X_0$ is specified from the beginning, a means for grasping the condition when the virtual currency encryption data is encrypted can reproduce the N-th pseudo-random number at any time from $X_0$. Thereby, the decryption means can decrypt the virtual currency encryption data using the pseudo-random number as a key. If the initial value $X_0$ is hidden, even when the encryption condition information (a numerical value indicating what number pseudo-random number) included in the virtual currency data is included in the virtual currency data in plaintext, a malicious third party who obtains the virtual currency data cannot grasp the condition when the virtual currency encryption data is encrypted from encryption condition information. Further, as described above, at least a part of the original data may be further attached to the virtual currency data in an unencrypted state, but, for example, some of the data may also serve as encryption condition information.

$$X_N = f(X_{N-1})$$

($X_N$ is the N-th pseudo-random number, and the pseudo-random number is formed from numbers, characters, symbols, or an enumeration of two or more of them.)

The inventor of the present invention also proposes a method executed by the first type of settlement device described above, as one aspect. The effect thereof is equal to that of the first settlement device. For example, the method is as follow.

The method is a settlement method executed by a settlement device capable of receiving data via a network and including a computer for performing data processing.

The settlement method includes steps executed by the computer of: a settlement device receiving step of receiving virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a decryption step of decrypting the virtual currency encryption data included in the virtual currency data received in the settlement device receiving step; and a settlement step of, when the virtual currency encryption data is capable of being decrypted in the decryption step, accepting settlement of an amount of money specified by the amount information included in the original data obtained by decryption of the virtual currency encryption data in the decryption step.

The inventor of the present invention also proposes, for example, a computer program for causing a general-purpose computer to function as the first type of settlement device described above, as one aspect of the present invention. For example, the computer program is as follow.

The computer program is a computer program for causing a computer capable of receiving data via a network and performing data processing to function as a settlement device.

The computer program is a computer program for causing the computer to function as: a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a decryption means that decrypts the virtual currency encryption data included in the virtual currency data received by the settlement device receiving means; and a settlement means that, when the virtual currency encryption data is capable of being decrypted with the decryption means, accepts settlement of an amount of money specified by the amount information included in the original data obtained by decryption of the virtual currency encryption data with the decryption means.

A second settlement device a settlement device including: a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a copy data recording means that records copy virtual currency encryption data that is data equal to the virtual currency encryption data; a second authentication means that compares the virtual currency encryption data included in the virtual currency data received by the settlement device receiving means with the copy virtual currency encryption data to determine whether both of the data coincide with each other, and determines that the virtual currency data sent from the predetermined device is authentic when both of the data coincide with each other; and a settlement means that accepts settlement of an amount of money specified by the amount information when the second authentication means determines that the virtual currency data sent from the predetermined device is authentic.

The virtual currency data used in combination with the second type of settlement device is the virtual currency data having the data structure of the virtual currency data according to the present invention, but the virtual currency encryption data included therein is not limited to encrypted data capable of being decrypted. The second settlement device includes the copy data recording means that records the copy virtual currency encryption data that is data equal to the virtual currency encryption data included in a large number of pieces of virtual currency data scheduled to be sent to the settlement device. Upon receiving the virtual currency data, the settlement device compares the virtual currency encryption data included in the virtual currency data with the copy virtual currency encryption data recorded in the copy data recording means. As a result, the settlement device determines whether one of the copy virtual currency encryption data recorded in the copy data recording means coincides with the virtual currency encryption data included in the received virtual currency data, determines that the virtual currency encryption data included in the virtual currency data is authentic when the virtual currency data coincides with one of the copy virtual currency encryption data, and accepts the settlement for the data of the amount of money specified by the amount information on condition thereof. In short, according to the first settlement device, whether the virtual currency data including the virtual currency encryption data is authentic is determined depending on whether the virtual currency encryption data can be decrypted, but, alternatively, according to the second settlement device, whether the virtual currency data is authentic is determined depending on the comparison between the virtual currency encryption data and the copy virtual currency encryption data prepared in advance by copying the virtual currency encryption data. Therefore, even in the second settlement device as in the first settlement device, it is possible to increase the accuracy of confirmation of the authenticity of the virtual currency data executed by such a settlement device, and as a result, to increase the safety of the virtual currency data used together with such a settlement device.

When the second settlement device uses the issue subject information or the like in order to determine whether the above-described virtual currency data is authentic, the issue subject information or the lime may be recorded in, for example, the copy data recording means in association with each copy virtual currency encryption data corresponding to the issue subject information or the like. On the other hand, the issue subject information or the like may be obtained by decryption of the copy virtual currency encryption data or the virtual currency encryption data, and thus issue subject information or the like can be used to determine whether the virtual currency data is authentic.

The inventor of the present invention also proposes a method executed by the second type of settlement device described above, as one aspect of the present invention. The effect thereof is equal to that of the second settlement device. For example, the method is as follow.

The method is a settlement method executed by a settlement device capable of receiving data via a network and including a recording medium and a computer for performing data processing.

The settlement method includes steps executed by the computer of: a settlement device receiving step of receiving virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a copy data recording step of recording copy virtual currency encryption data that is data equal to the virtual currency encryption data in the recording medium; a second authentication step of comparing the virtual currency encryption data included in the virtual currency data received in the settlement device receiving step with the copy virtual currency encryption data recorded in the recording medium to determine whether both of the data coincide with each other, and determining that the virtual currency data sent from the predetermined device is authentic when both of the data coincide with each other; and a settlement step of accepting settlement of an amount of money specified by the amount information when it is determined in the second authentication step that the virtual currency data sent from the predetermined device is authentic.

The inventor of the present invention also proposes, for example, a computer program for causing a general-purpose computer to function as the second type of settlement device described above, as one aspect of the present invention. For example, the computer program is as follow.

The computer program is a computer program for causing a computer capable of receiving data via a network and performing data processing to function as a settlement device.

The computer program is a computer program causing the computer to function as: a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a copy data recording means that records copy virtual currency encryption data that is data equal to the virtual currency encryption data; a second authentication means that compares the virtual currency encryption data included in the virtual currency data received by the settlement device receiving means with the copy virtual currency encryption data to determine whether both of the data coincide with each other, and determines that the virtual currency data sent from the predetermined device is authentic when both of the data coincide with each other; and a settlement means that accepts settlement of an amount of money specified by the amount information when the second authentication means determines that the virtual currency data sent from the predetermined device is authentic.

A third settlement device is a settlement device including: a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a plaintext information recording means that records the original data included in one virtual currency encryption data in an encrypted state; an encryption means that encrypts the original data recorded in the plaintext information recording means using an encryption method equal to the predetermined encryption method used when the original data is encrypted into the virtual currency encryption data; a third authentication means that compares the virtual currency encryption data included in the virtual currency data received by the settlement device receiving means with the data obtained by encryption of the original data recorded in the plaintext information recording means with the encryption means to determine whether both of the data coincide with each other, and determines that the virtual currency data sent from the predetermined device is authentic when both of the data coincide with each other; and a settlement means that accepts settlement of an amount of money specified by the amount information when the third authentication means determines that the virtual currency data sent from the predetermined device is authentic.

The virtual currency data used in combination with the third type of settlement device is the virtual currency data having the data structure of the virtual currency data according to the present invention, but the virtual currency encryption data included therein is not limited to encrypted data capable of being decrypted. The third settlement device includes the plaintext information recording means that records, in association with each other, the original data which are used to generate the virtual currency encryption data included in a large number of pieces of virtual currency data scheduled to be sent to the settlement device. Upon receiving the virtual currency data, the settlement device generates the data by encrypting the original data which are recorded in the plaintext information recording means described above. Then, the settlement device determines that the virtual currency data is authentic when the data coincides with the virtual currency encryption data included in the received virtual currency data. The settlement device accepts the settlement for the data of the amount of money specified by the amount information on condition that the virtual currency data is determined to be authentic. In short, according to the first settlement device, whether the virtual currency data including the virtual currency encryption data is authentic is determined depending on whether the virtual currency encryption data can be decrypted, but, alternatively, according to the third settlement device, whether the virtual currency data is authentic is determined depending on whether the same data as the virtual currency encryption data can be created again by the encryption of the original data. Therefore, even in the third settlement device as in the first settlement device, it is possible to increase the accuracy of confirmation of the authenticity of the virtual currency data executed by such a settlement device, and as a result, to increase the safety of the virtual currency data used together with such a settlement device.

The third type of settlement device includes the encryption means, and encrypts the original data which are recorded in the plaintext information recording means by the encryption means. Needless to say, a large number of pieces of the virtual currency data exist at the same time, for example, on the network, on the recording medium described above, or in the predetermined device described above. When the encryption method, for example, both a key and an algorithm are always the same, the encryption means of the settlement device encrypts the original data which are recorded in the plaintext information recording means, with a combination of one kind of key and algorithm, and the data obtained in this way coincides with the virtual currency encryption data included in the virtual currency data sent to the settlement device, unless the virtual currency encryption data is particularly falsified. On the other hand, at least one of the virtual currency encryption data included in a large number of pieces of virtual currency data, or if possible, all the virtual currency encryption data may be encrypted by a method different from that used for other virtual currency encryption data. In this case, when the method of encrypting the original data using the encryption means does not coincide with the method used when the virtual currency encryption data is encrypted to be compared therewith, the data obtained by the encryption of the original data recorded in the plaintext information recording means does not coincide with the virtual currency encryption data included in the virtual currency data sent to the settlement device. That is, the settlement device should grasp how to encrypt the virtual currency encryption data included in the virtual currency data sent to the settlement device. This can be achieved by the encryption condition information described above. The contents and usage of the data may be the same as those described in the first settlement device.

The inventor of the present invention also proposes a method executed by the third type of settlement device described above, as one aspect of the present invention. The effect thereof is equal to that of the third settlement device. For example, the method is as follow.

The method is a settlement method executed by a settlement device capable of receiving data via a network and including a computer for performing data processing.

The settlement method includes steps executed by the computer of: a settlement device receiving step of receiving virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a plaintext information recording step of recording the original data included in one virtual currency encryption data in an encrypted state in the recording medium; an encryption step of encrypting the original data recorded in the plaintext information recording step using an encryption method equal to the predetermined encryption method used when the original data is encrypted into the virtual currency encryption data; a third authentication step of comparing the virtual currency encryption data included in the virtual currency data received in the settlement device receiving step with the data obtained by encryption of the original data recorded in the plaintext information recording step in the encryption step to determine whether both of the data coincide with each other, and determining that the virtual currency data sent from the predetermined device is authentic when both of the data coincide with each other; and a settlement step of accepting settlement of an amount of money specified by the amount information when it is determined in the third authentication step that the virtual currency data sent from the predetermined device is authentic.

The inventor of the present invention also proposes, for example, a computer program for causing a general-purpose computer to function as the third type of settlement device described above, as one aspect of the present invention. For example, the computer program is as follow.

The computer program is a computer program for causing a computer capable of receiving data via a network and performing data processing to function as a settlement device.

The computer program is a computer program causing the computer to function as: a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value; a plaintext information recording means that records the original data included in one virtual currency encryption data in an encrypted state; an encryption means that encrypts the original data recorded in the plaintext information recording means using an encryption method equal to the predetermined encryption method used when the original data is encrypted into the virtual currency encryption data; a third authentication means that compares the virtual currency encryption data included in the virtual currency data received by the settlement device receiving means with the data obtained by encryption of the original data recorded in the plaintext information recording means with the encryption means to determine whether both of the data coincide with each other, and determines that the virtual currency data sent from the predetermined device is authentic when both of the data coincide with each other; and a settlement means that accepts settlement of an amount of money specified by the amount information when the third authentication means determines that the virtual currency data sent from the predetermined device is authentic.

The inventor of the present invention also proposes the virtual currency data generating device for generating the virtual currency data having the data structure of the virtual currency data according to the present invention, as one aspect of the present invention. The effect according to this aspect is equal to that described in the data structure of the virtual currency data according to the present invention.

An example of the virtual currency data generating device includes a currency generating and encrypting means that encrypts, according to a predetermined encryption method, plaintext original data that is data including issue subject information including at least information on an issue subject of the virtual currency data and amount information that is information for specifying a monetary value, and thus generates virtual currency encryption data which is data obtained by encryption of the original data, wherein the virtual currency data generating device is capable of generating virtual currency data which includes the virtual currency encryption data and is data of virtual currency having a monetary value.

The virtual currency data generating device includes a currency generating and encrypting means that encrypts, according to a predetermined encryption method, plaintext original data that is data including issue subject information including at least information on an issue subject of the virtual currency data and amount information that is information for specifying a monetary value, and thus generates virtual currency encryption data which is data obtained by encryption of the original data, wherein the virtual currency data generating device is capable of generating virtual currency data which includes the virtual currency encryption data and is data of virtual currency having a monetary value. The virtual currency data generating device may be integrated with one of the settlement devices described above in the present invention.

The virtual currency data generating device may include a generating device transmitting means that transmits the generated virtual currency data to a predetermined device via a network. Thereby, the generated virtual currency data can be transmitted to a user terminal (for example, the above-described receiving device) owned by a user, via a network (for example, Internet).

The original data encrypted by the currency generating and encrypting means of the virtual currency data generating device may include plaintext credit information that is information for supporting a credit of virtual currency data. The effect is the same as the effect described in the data structure of the virtual currency data when the credit information is used. The credit information may be as described in the data structure of the virtual currency data.

The inventor of the present invention also proposes the method executed by the virtual currency data generating device described so far, as one aspect of the present invention. The effect thereof is equal to that of the virtual currency data generating device.

An example of the method is a method executed by a virtual currency data generating device including a computer and capable of generating virtual currency data which is data of virtual currency having a monetary value. The method is a method including a step executed by the computer of: encrypting, according to a predetermined encryption method, plaintext original data that is data including issue subject information including at least information on an issue subject of the virtual currency data and amount information that is information for specifying a monetary value, and thus generating virtual currency encryption data which is data obtained by encryption of the original data, and thus generating virtual currency data which includes the virtual currency encryption data and is data of virtual currency having a monetary value.

The inventor of the present invention also proposes, for example, a computer program for causing a general-purpose computer to function as the virtual currency data generating device described above, as one aspect of the present invention. For example, the computer program is as follow.

This is a computer program for causing a computer to function as the virtual currency data generating device capable of generating virtual currency data which is the data of the virtual currency having the monetary value.

The computer program is a computer program causing the computer to function as: a currency generating and encrypting means that encrypts, according to a predetermined encryption method, plaintext original data that is data including issue subject information including at least information on an issue subject of the virtual currency data and amount information that is information for specifying a monetary value, and thus generates virtual currency encryption data which is data obtained by encryption of the original data, and thus causing the computer to generate virtual currency data which includes the virtual currency encryption data and is data of virtual currency having a monetary value.

The inventor of the present invention also proposes a credit information recording device used in combination with the virtual currency data including the virtual currency encryption data generated by encryption of the original data including the credit information, as one aspect. Since the credit information included in each virtual currency data is recorded by such a credit information recording device, the stability of the value of each virtual currency data can be increased. For example, if each user, who is a user of the virtual currency data, accesses the credit information recording device via a network to confirm the credit information recorded in the credit information recording means and associated with (or encrypted and included in) the virtual currency data owned by the user, the user increases the confidence in the virtual currency data owned by the user. This means that the stability of the value of the virtual currency data is increased.

An example of the credit information recording device is a credit information recording device of virtual currency data including a credit information recording means that, in a state where a correspondence relation between each of the virtual currency data generated by the virtual currency data generating device and credit information for supporting a credit of the virtual currency data is clear, records the credit information, the virtual currency data generating device including a currency generating and encrypting means that encrypts, according to a predetermined encryption method, plaintext original data that is data including issue subject information including at least information on an issue subject of the virtual currency data, amount information that is information for specifying a monetary value, and a plaintext credit information that is information supporting the credit of the virtual currency data, and thus generates virtual currency encryption data which is data obtained by encryption of the original data, and thus the virtual currency data generating device being capable of generating virtual currency data which includes the virtual currency encryption data and is data of virtual currency having a monetary value.

The credit information recorded in the credit information recording device can be as described in the data structure of virtual currency data. For example, the credit information may be information for specifying a predetermined asset serving as an origin of the credit of the virtual data, and information on the asset may be recorded in the credit information recording means in a state where a correspondence relation between each of the virtual currency data and the asset serving as an origin of the credit of the virtual currency data is clear. Further, in this state, the asset may be a buried resource, and the asset may be power that is scheduled to be generated in the future.

Further, the credit information recording device may be integrated with the virtual currency data generating device described above. As a result, the settlement device, the virtual currency data generating device, and the credit information recording device may be integrated as a whole.

**Brief Description of Drawings**

FIG. 1 is a diagram showing an overall structure of a settlement system according to a first embodiment;

FIG. 2 is a diagram showing an external appearance of a user terminal included in the settlement system shown in FIG. 1;

FIG. 3 is a diagram showing a configuration of hardware of the user terminal included in the settlement system shown in FIG. 1;

FIG. 4 is a block diagram showing functional blocks generated inside the user terminal included in the settlement system shown in FIG. 1;

FIG. 5 is a diagram showing a configuration of hardware of a settlement device included in the settlement system shown in FIG. 1;

FIG. 6 is a block diagram showing functional blocks generated inside the settlement device included in the settlement system shown in FIG. 1;

FIG. 7 is a diagram showing a configuration of hardware of a settlement terminal included in the settlement system shown in FIG. 1;

FIG. 8 is a block diagram showing functional blocks generated inside the settlement terminal included in the settlement system shown in FIG. 1;

FIG. 9 is a diagram showing a flow of a process to be executed at the time of settlement on the settlement system shown in FIG. 1;

FIG. 10 is a diagram showing an example of an image displayed on a display of the user terminal included in the settlement system shown in FIG. 1;

FIG. 11 is a diagram showing notionally the content of a part of data recorded on a credit information recording unit in the settlement device included in the settlement system shown in FIG. 1;

FIG. 12(A) is a diagram showing notionally a data structure of original data serving as an origin of virtual currency encryption data contained in virtual currency data used in the settlement system shown in FIG. 1, and FIG. 12(B) is a diagram showing notionally a data structure of the virtual currency data used in the settlement system shown in FIG. 1;

FIG. 13 is a diagram showing another example of an image displayed on the display of the user terminal included in the settlement system shown in FIG. 1;

FIG. 14 is a diagram showing further another example of an image displayed on the display of the user terminal included in the settlement system shown in FIG. 1;

FIG. 15 is a block diagram showing functional blocks generated inside a settlement device included in a settlement system of Modification Example 1;

FIG. 16 is a block diagram showing functional blocks generated inside a settlement device included in a settlement system of a second embodiment;

FIG. 17 is a block diagram showing functional blocks generated inside a settlement device included in a settlement system of a third embodiment; and

FIG. 18 is a block diagram showing a functional block generated inside a settlement device included in a settlement system of Modification Example 3.

**Description of Embodiments**

First to third embodiments of the present invention will be described below. In the description of each embodiment and modification example, the same element is denoted by the same reference numeral and duplication description will not be presented in some cases.

<<First Embodiment>>

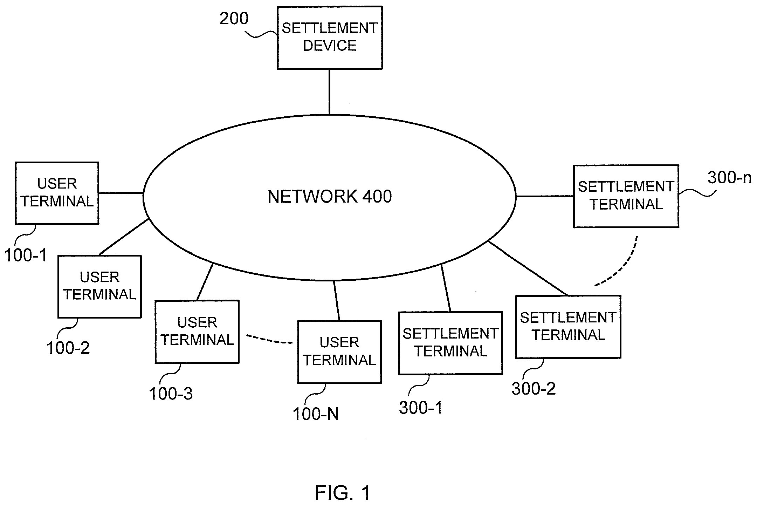

FIG. 1 schematically shows an overall configuration of a settlement system according to a first embodiment.

The settlement system is configured to include a plurality of user terminals 100-1 to 100-N (which may also hereinafter simply be described as "user terminal 100."), a settlement device 200, and settlement terminals 300-1 to 300-n (which may also hereinafter simply be described as "settlement terminal 300."). These are all connectable to a network 400.

The network 400 is the Internet in this embodiment without being limited thereto.

The user terminal 100 is an example of a receiving device according to the present invention, the settlement terminal 300 is an example of a transmission device according to the present invention, and the settlement device 200 is an example of a settlement device according to the present invention.

Although not limited thereto, in this embodiment, payment of money using virtual currency data to be described below is, in principle, performed on an administrator (who manages or owns the settlement terminal 300, for example) of the settlement terminal 300 from an administrator (owner) of the user terminal 100, and is performed on an administrator of another user terminal 100 from an administrator of one user terminal 100 in some cases.

Normally, the user terminal 100 is possession of each user. The user terminal 100 includes a computer. The user terminal 100 is a mobile phone, a smartphone, a tablet, a notebook computer, a desktop computer, or the like. Among them, the smartphone or the tablet is particularly preferable for use as the user terminal 100, considering that the smartphone or the tablet is portable and suitable for installation of computer programs to be described below. The smartphone is, for example, an iPhone that is manufactured and sold by Apple Japan, LLC. An example of the tablet is an iPad that is manufactured and sold by Apple Japan, LLC. Hereinafter, the description is made assuming that the user terminal is the smartphone, but is not limited thereto.

The user terminal 100 at least needs to be capable of receiving data, but may also be capable of transmitting data. In this embodiment, since the user terminal 100 is the smartphone, it is naturally possible to receive and transmit data.

A configuration of the user terminal 100 will be described below. Each of the user terminals 100-1 to 100-N has the same configuration in relation to the present invention.

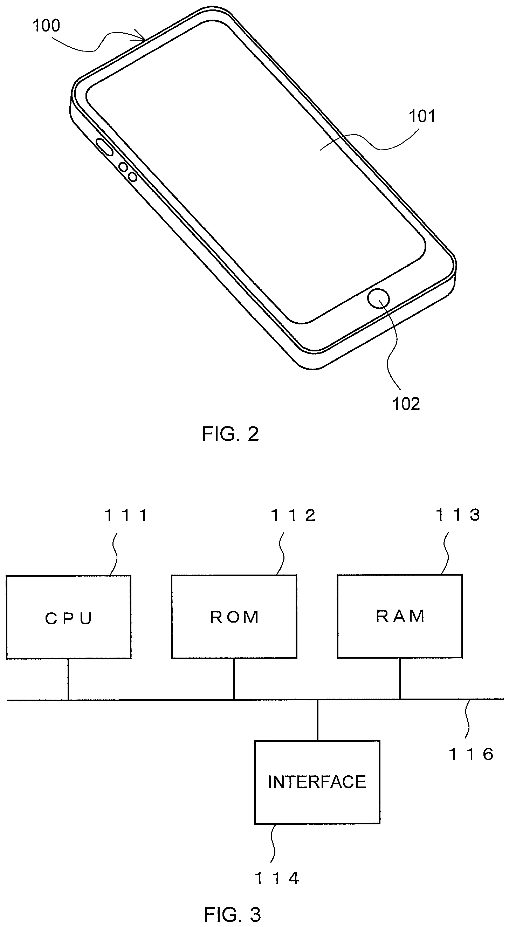

An example of external appearance of the user terminal 100 is shown in FIG. 2.

The user terminal 100 includes a display 101. The display 101 is used to display still images or moving images, and a publicly known or well-known display can be used. The display 101 is, for example, a liquid crystal display. The user terminal 100 also includes an input device 102. The input device 102 is used for the user to perform a desired input on the user terminal 100. A publicly known or well-known input device can be used as the input device 102. The input device 102 of the user terminal 100 in this embodiment is a button-type input device, but is not limited thereto, and a numeric keypad, a keyboard, a trackball, a mouse, or the like can also be used. Moreover, when the display 101 is a touch panel, the display 101 also has a function of the input device 102, which is applied to this embodiment.

Data input from the input device 102 will be described in detail below, but include, for example, generation request information on a generation request of virtual currency data, payment information on use of virtual currency data, transfer information on transfer of virtual currency data, browsing request information indicating the purport of a browsing wish of credit information, and a user ID.

A configuration of hardware of the user terminal 100 is shown in FIG. 3.

The hardware includes a CPU (central processing unit) 111, a ROM (read only memory) 112, a RAM (random access memory) 113, and an interface 114, which are interconnected by a bus 116.

The CPU 111 is an arithmetic operation device that performs arithmetic operations. The CPU 111, for example, executes a computer program recorded in the ROM 112 to execute processing to be described below. It should be noted that the computer program used herein includes at least a computer program for causing the user terminal 100 to function as a receiving device of the present invention. The computer program may be pre-installed in the user terminal 100, or may be post-installed. The computer program may be installed in the user terminal 100 via a predetermined recording medium (not shown) such as a memory card, or may be installed via a network such as the Internet.

The ROM 112 records computer programs and data necessary for the CPU 111 to execute processing to be described below. The computer program recorded in the ROM 112 is not limited thereto. For example, when the user terminal 100 is the smartphone, a computer program and data are recorded, for example, for executing telephone calls or e-mails, which are required to cause the user terminal to function as the smartphone. The user terminal 100 can also browse a homepage based on data received via the network 400, and is mounted with a publicly known web browser for enabling the browsing of the homepage.

The RAM 113 provides a work area necessary for the CPU 111 to perform processing. Virtual currency data to be described below may be recorded in the RAM 113.

The interface 114 performs data exchange between the CPU 111 and the RAM 113 connected via the bus 116 and the outside. The display 101 and the input device 102 described above are connected to the interface 114. The operation content input from the input device 102 is input to the bus 116 from the interface 114, and image data to be described below is output to the display 101 from the interface 114. The interface 114 is also connected to a transmission and reception unit, which is not shown.

The transmission and reception unit transmits and receives data via the network 400 that is the Internet. Such communication may also be performed in a wired manner, but when the user terminal 100 is the smartphone, the communication is wirelessly performed in general. As long as it is possible, the transmission and reception unit may have a publicly known or well-known configuration. The data (for example, virtual currency data) received by the transmission and reception unit from the network 400 is received through the interface 114, and the data (for example, virtual currency data) passed from the interface 114 to the transmission and reception unit is sent to the outside, for example, to the settlement device 200 by the transmission and reception unit via the network 400.

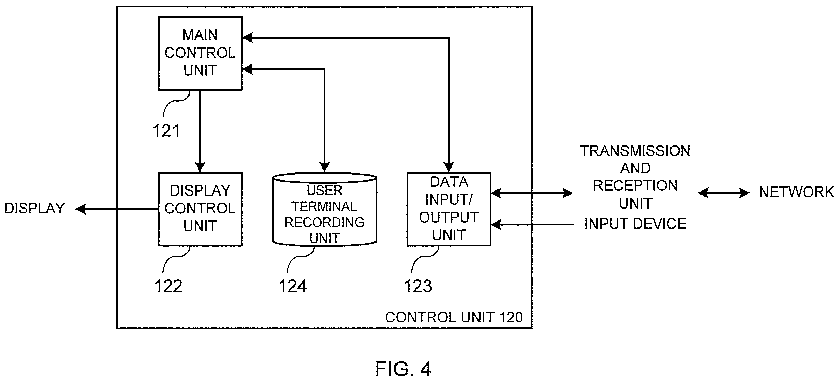

Functional blocks as shown in FIG. 4 are generated within the user terminal 100 when the CPU 111 executes the computer program. It should be noted that while the following functional blocks may be generated with functions of the above-described computer program alone for causing the user terminal 100 to function as the user terminal of the present invention, the following functional blocks may be generated in cooperation with the above-described computer program and an OS and other computer programs installed in the user terminal 100.

A control unit 120 to be described below is generated in the user terminal 100 in relation to functions of the present invention, and a main control unit 121, a display control unit 122, a data input/output unit 123, and a user terminal recording unit 124 are generated in the control unit 120.

The control unit 120 executes information processing as will be described below.

The main control unit 121 performs overall control within the control unit 120. For example, the main control unit 121 controls the display control unit 122 based on data received from the data input/output unit 123 to be detailed below.

The main control unit 121 may receive virtual currency data to be described below from the data input/output unit 123 that will be described below. Upon receiving the data, the main control unit 121 sends it to the user terminal recording unit 124 or the display control unit 122. The main control unit 121 may read the virtual currency data from the user terminal recording unit 124 as will be described below. The main control unit 121, which has read the virtual currency data, instructs the display control unit 122 to display based on the virtual currency data, and sends it to the data input/output unit 123 in some cases.

From the data input/output unit 123, the main control unit 121 may receive the above-described generation request information, payment information, transfer information, or browsing request information input from the input device 102. Upon receiving such information, the main control unit 121 performs processing to be described below. For example, upon receiving the generation request information, the main control unit 121 adds necessary information thereto, sends it to the data input/output unit 123. The generation request information added with the necessary information is sent from the data input/output unit 123 to the transmission and reception unit, and is sent from the transmission and reception unit to the settlement device 200 via the network 400.

The display control unit 122 controls images to be displayed on the display 101 under control of the main control unit 121. An image based on the data sent from the display control unit 122 is displayed on the display 101. The main control unit 121 sends an instruction on what image should be displayed on the display 101, to the display control unit 122.

The data input/output unit 123 inputs and outputs data to/from the control unit 120. Specifically, the data input/output unit 123 receives the input from the input device 102. For example, the generation request information, the payment information, the transfer information, or the browsing request information is input from the input device 102 to the data input/output unit 123. Such information is sent from data input/output unit 123 to the main control unit 121.

In addition, the data input/output unit 123 receives, from the transmission and reception unit, the virtual currency data sent from the settlement device 200 via the network 400. The data input/output unit 123 sends the received virtual currency data to the main control unit 121.

Further, the data input/output unit 123 may receive the virtual currency data from the main control unit 121. The data input/output unit 123, which has received the virtual currency data, sends the virtual currency data to the transmission and reception unit, and the virtual currency data is sent from the transmission and reception unit to the settlement device 200, for example. A transmission destination of the virtual currency data is designated by the main control unit 121 according to the input from the input device 102, as will be described below.

As described above, when the main control unit 121 receives the virtual currency data from the data input/output unit 123, the user terminal recording unit 124 receives the virtual currency data from the main control unit 121 and records it. When viewed as hardware, the user terminal recording unit 124 is configured by a part of the RAM 113.

In addition, the virtual currency data recorded in the user terminal recording unit 124 may be read by the main control unit 121 at a timing to be described below.

The settlement device 200 will be described below. In this embodiment, the settlement device 200 also serves as a virtual currency data generating device and a credit information recording device as referred to in the present invention, but is not limited thereto.

The settlement device 200 is a general computer, and in this embodiment, is a general server device in more detail. Hardware configuration thereof may be equivalent to that of a settlement device in the conventional settlement system.

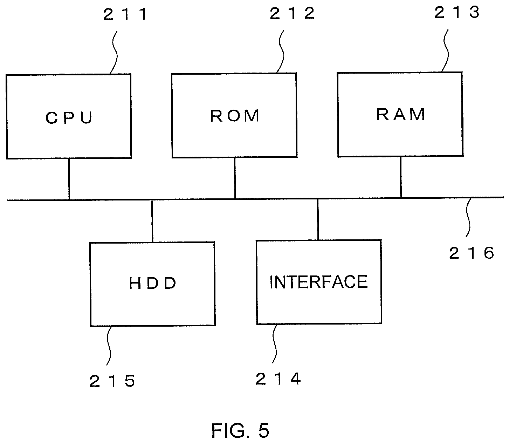

An example of the hardware configuration of the settlement device 200 is shown in FIG. 5.

The hardware includes a CPU 211, a ROM 212, a RAM 213, an interface 214, and a large-capacity recording medium that is an HDD (hard disk drive) 215 in this embodiment, and these are connected to each other by a bus 216.

The CPU 211 is an arithmetic operation device that performs arithmetic operations. The CPU 211, for example, executes a computer program recorded in the ROM 212 to execute processing to be described below. It should be noted that the computer program used herein includes at least a computer program for causing the settlement device 200 to function as a settlement device (alternatively, a virtual currency data generating device or a credit information recording device) of the present invention. The computer program may be pre-installed in the settlement device 200, or may be post-installed. The computer program may be installed in the settlement device 200 via a predetermined recording medium such as a memory card, or may be installed via the network such as the Internet.

The ROM 212 records the computer program and data necessary for the CPU 211 to execute processing to be described below. The computer program recorded in the ROM 212 is not limited thereto, and any other necessary computer programs may be recorded.

The RAM 213 provides a work area necessary for the CPU 211 to perform processing.

The interface 214 performs data exchange between the CPU 211, the RAM 213, and the like connected via the bus 216 and the outside. The interface 214 is at least connected to the transmission and reception unit. The data received by the transmission and reception unit from the network 400 is received by the interface 214, and the data passed from the interface 214 to the transmission and reception unit is sent to the outside, for example, to the user terminal 100 by the transmission and reception unit, via the network 400.

The HDD 215 is a large-capacity recording medium as described above, and records data. At least a part of the computer program or data necessary for the CPU 211 to execute processing to be described below may be recorded on the HDD 215 instead of the ROM 212, and most of the computer program and data is more practically recorded on the HDD 215.

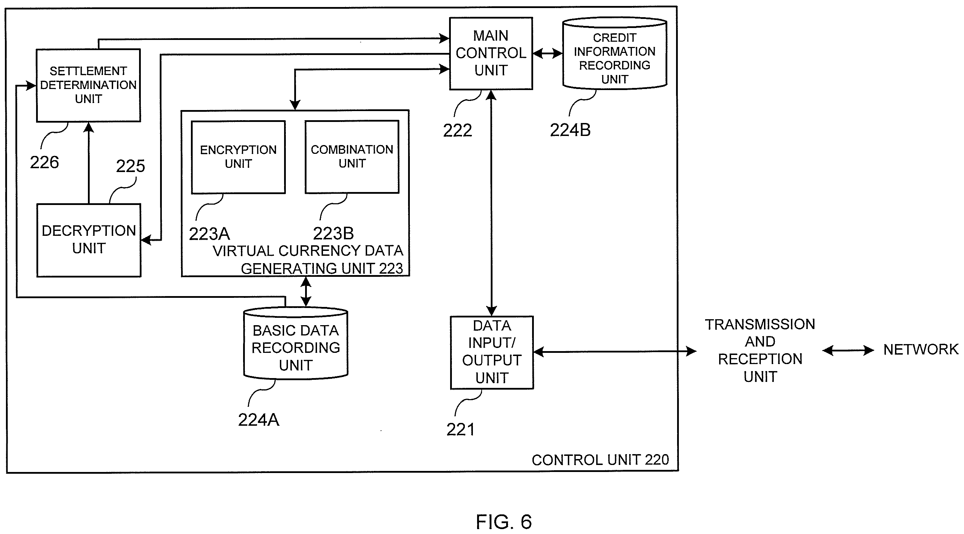

Functional blocks as shown in FIG. 6 are generated within the settlement device 200 when the CPU 211 executes the computer program. It should be noted that while the following functional blocks may be generated with functions of the above-described computer program alone for causing the settlement device 200 to function as the settlement device of the present invention, the following functional blocks may be generated in cooperation with the above-described computer program and the OS and other computer programs installed in the settlement device 200.

A control unit 220 to be described below is generated in the settlement device 200 in relation to the functions of the present invention. A data input/output unit 221, a main control unit 222, a virtual currency data generating unit 223, a basic data recording unit 224A, a credit information recording unit 224B, a decryption unit 225, and a settlement determination unit 226 are generated in the control unit 220.

The data input/output unit 221 inputs and outputs data to/from the control unit 220. Specifically, the data input/output unit 221 receives various data to be described below, from the main control unit 222.

For example, the data input/output unit 221 receives virtual currency data from the main control unit 222. The received virtual currency data is sent to the transmission and reception unit from the data input/output unit 221, and is sent to the user terminal 100 via the network 400.

The data input/output unit 221 also receives various data to be described below, which are received by the transmission and reception unit from the user terminal 100 or the settlement terminal 300 via the network 400, from the transmission and reception unit, and sends the received data to the main control unit 222. For example, the data input/output unit 221 may receive virtual currency data or generation request information from the transmission and reception unit, and the data input/output unit 221, which has received any one of the virtual currency data and the generation request information, sends any one to the main control unit 222.

The main control unit 222 performs overall control within the control unit 220. For example, the main control unit 222 is configured to perform settlement processing to be described below, and is configured to perform necessary processing by sending data to be described below to the virtual currency data generating unit 223, decryption unit 225, and the like.

As described above, the main control unit 222 may receive the virtual currency data from the data input/output unit 221, and the main control unit 222, which has received the virtual currency data, sends the virtual currency data to the decryption unit 225. In this case, only the virtual currency encryption data among the data included in the virtual currency data may be sent to the decryption unit 225.

As described above, the main control unit 222 may receive the generation request information from the data input/output unit 221, and the main control unit 222, which has received the information, sends the information to the virtual currency data generating unit 223.

The main control unit 222 may also receive final determination data, which will be described below, from the settlement determination unit 226. As will be described below, the final determination data is data indicating whether the settlement is accepted or the settlement is not accepted. Upon receiving the positive final determination data with the content of accepting the settlement which will be described below, the main control unit 222 performs settlement processing. In this embodiment, the settlement processing is a process for accepting payment of money to the settlement terminal 300 that has sent the virtual currency encryption data. The main control unit 222 retains data indicating what kind of payment has been made. For example, the main control unit 222 is configured to cause a recording medium (not shown) for each settlement terminal 300 to record information indicating how much payment is finally permitted to anybody (administrator of any settlement terminal 300, etc.).

On the other hand, upon receiving the negative final determination data, which will be described below, indicating that payment is not accepted, the main control unit 222 does not perform processing for accepting the settlement.

The main control unit 222 also has a function of performing credit determination to be described below. When performing the credit determination, the main control unit 222 of this embodiment uses data recorded in the credit information recording unit 224B, but is not limited thereto. Details of the data recorded in the credit information recording unit 224B will be described below.

As described above, the virtual currency data generating unit 223 may receive the generation request information from the main control unit 222. Upon receiving the generation request information, the virtual currency data generating unit 223 generates virtual currency data. The virtual currency data generating unit 223 includes an encryption unit 223A and a combination unit 223B. A method of generating the virtual currency data using the virtual currency data generating unit 223 will be described in detail below.

The virtual currency data generating unit 223 uses data recorded in the basic data recording unit 224A when generating the virtual currency data. The virtual currency data generating unit 223 reads out and uses necessary data out of the data recorded in the basic data recording unit 224A at the time of generation of the virtual currency data.

The virtual currency data generating unit 223 sends the generated virtual currency data to the main control unit 222.

Data necessary for generating the virtual currency data is recorded in the basic data recording unit 224A. Details of the data recorded in the basic data recording unit 224A will be described below.

As described above, the decryption unit 225 may receive virtual currency data (or virtual currency encryption data) from the main control unit 222.

Upon receiving the virtual currency encryption data, the decryption unit 225 decrypts the received data. Details of the decryption processing will be described below. The decrypted data is original data, and includes issue subject information, amount information, and credit information (all of which will be described in detail below). When being able to decrypt the virtual currency encryption data, the decryption unit 225 sends at least the issue subject information and the amount information among the issue subject information, the amount information, and the credit information to the settlement determination unit 226.

On the other hand, when not being able to decrypt the virtual currency encryption data, the decryption unit 225 notifies the settlement determination unit 226 of the purport thereof.

As described above, at least the issue subject information and the amount information among the issue subject information, the amount information, and the credit information may be sent to the settlement determination unit 226 from the decryption unit 225. Upon receiving these types of information, the settlement determination unit 226 performs a final determination that is a determination as to whether the settlement is accepted or not. As a result, the settlement determination unit 226 generates final determination data that is data including the content of either of acceptance of the settlement or not acceptance of the settlement. As will be described below, the settlement determination unit 226 may use the data recorded in the basic data recording unit 224A when performing such a determination. A method of generating the final determination data using the settlement determination unit 226 will be described below.

As described above, the settlement determination unit 226 may receive the notification that the virtual currency encryption data cannot be decrypted, from the decryption unit 225. Upon receiving the notification, the settlement determination unit 226 generates final determination data including the content of not acceptance of the settlement.

In any case, when generating the final determination data, the settlement determination unit 226 sends it to the main control unit 222.

The settlement terminal 300 will be described below.

The settlement terminal 300 plays the same role as the settlement terminal used in the settlement system using the credit card, and is a general computer. For example, it is assumed that the settlement terminal 300 is configured by a tablet.

The settlement terminal 300 includes a touch panel display (not shown), but an external appearance thereof is not shown because of the same as that in FIG. 2. As a result, the settlement terminal 300 includes a display and an input device. However, the settlement terminal 300 may alternatively include a display that is not a touch panel type and an input device including necessary input devices selected from publicly known or well-known input devices such as a numeric keypad, a keyboard, a mouse, and a trackball, in other words, may include the display and the input device separately. The description will be made below assuming that the settlement system in this embodiment includes a touch panel display.

In addition, the settlement terminal 300 includes a camera (not shown). The camera may be externally attached, but the settlement terminal 300, which is a tablet, includes a publicly known built-in camera.

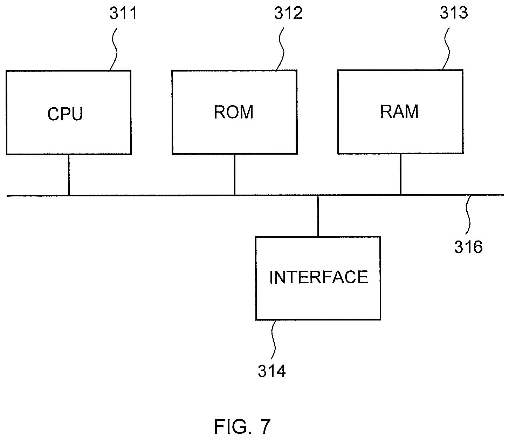

A configuration of hardware of the settlement terminal 300 is shown in FIG. 7.

The hardware includes a CPU 311, a ROM 312, a RAM 313, and an interface 314, which are interconnected by a bus 316.

The CPU 311 is an arithmetic operational device that performs arithmetic operations. The CPU 311, for example, executes a computer program recorded in the ROM 312 to execute processing to be described below. The computer program may be pre-installed in the settlement terminal 300, or may be post-installed. The computer program may be installed in the settlement terminal 300 via a predetermined recording medium such as the memory card, or may be performed via a network such as the LAN or the Internet.

The ROM 312 records the computer program and data necessary for the CPU 311 to execute processing to be described below, in other words, for causing the computer to function as a transmission device according to the present invention. The computer program recorded in the ROM 312 is not limited thereto, and any other necessary computer programs may be recorded.

The RAM 313 provides a work area necessary for the CPU 311 to perform processing.

The interface 314 performs data exchange between the CPU 311, the RAM 313 and the like connected via the bus 316 and the outside. The Interface 314 is at least connected to the transmission and reception unit which is not shown. The transmission and reception unit may be connected to the network 400 to at least transmit data via the network 400, but is configured to transmit and receive data via the network 400 in this embodiment. The data passed to the transmission and reception unit from the interface 314 is sent to the outside, for example, to the settlement device 200 by the transmission and reception unit, via the network 400. The data output from the interface 314 and transmitted from the transmission and reception unit is mainly virtual currency data in relation to this embodiment.

The interface 314 is also connected to the input device provided on the touch panel display so as to accept an input from the input device. The interface 314 is connected to the touch panel display so as to send data for displaying an image to be described below, to the touch panel display. The data input from the input device to the interface 314 is, for example, data instructing the start of payment, a settlement terminal ID to be described below, and the like.

The interface 314 is also connected to the camera described above. Image data including an image for specifying the virtual currency data is input from the camera to the interface 314. The virtual currency data is actually input to the interface 314 from the camera, which is slightly inaccurate.

The hardware may include a large-capacity recording medium, and the function at this time is as described above.

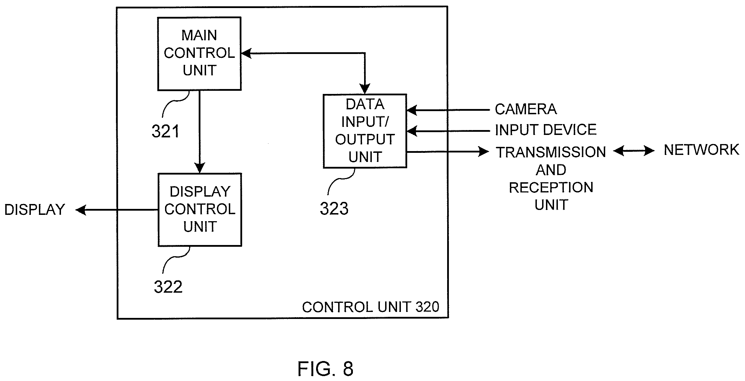

Functional blocks as shown in FIG. 8 are generated within the settlement terminal 300 when the CPU 311 executes the computer program. It should be noted that the following functional blocks may be generated with functions of the above-described computer program alone for causing the settlement terminal 300 to function as the settlement terminal of the present invention, the following functional blocks may be generated in cooperation with the above-described computer program and the OS and other computer programs installed in the settlement terminal 300.

A control unit 320 to be described below is generated in the settlement terminal 300 in relation to the functions of the present invention, and a main control unit 321, a display control unit 322, and a data input/output unit 323 are generated in the control unit 320.

The control unit 320 executes information processing as will be described below.

The main control unit 321 performs overall control within the control unit 320. For example, the main control unit 321 controls the display control unit 322 based on data received from the data input/output unit 323 to be detailed below.

The main control unit 321 is configured to receive virtual currency data from the data input/output unit 323 to be described below. The main control unit 321 of each settlement terminal 300 records a unique settlement terminal ID for each settlement terminal 300. The main control unit 321 attaches data of the settlement terminal ID to the received virtual currency data and sends it to the data input/output unit 323.

The display control unit 322 controls the images to be displayed on the above-described display of the touch panel type under control of the main control unit 321. An image based on the data sent from the display control unit 322 is displayed on the display. The main control unit 321 sends an instruction on what image should be displayed on the display, to the display control unit 322.

The data input/output unit 323 inputs and outputs data to/from the control unit 320.

Specifically, the data input/output unit 323 receives the input from the input device and sends it to the main control unit 321. An example of data input from the input device to the data input/output unit 323 is data for instructing the start of settlement. In addition, the settlement terminal ID described above may be input. Further, image data including the virtual currency data captured by the camera may be input to the data input/output unit 323.

Moreover, the data input/output unit 323 outputs the data to the transmission and reception unit, which is not shown. The data output to the transmission and reception unit is the virtual currency data sent from the main control unit 321. The settlement terminal ID is attached to the virtual currency data. The data output to the transmission and reception unit is transmitted to the settlement device 200 from the transmission and reception unit via the network 400.

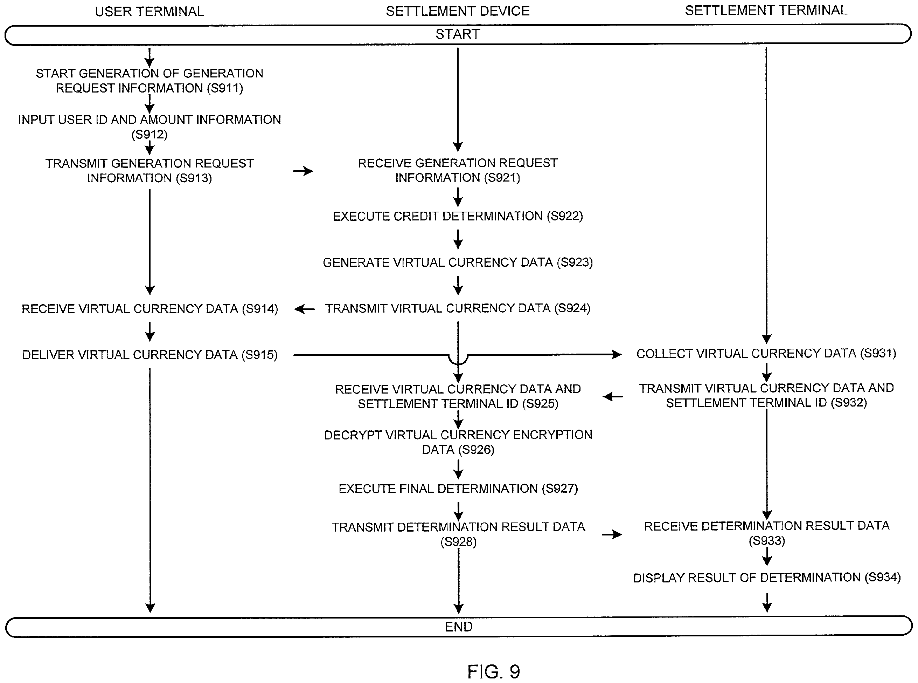

A method of using the settlement system as described above and an operation thereof will be described below with reference to FIG. 9.

First, as preparation for using such a system, a user ID is set in each of the user terminals 100 and a settlement terminal ID is set in each of the settlement terminals 300.

The user ID is an ID unique to each of the user terminals 100 for identifying each of the user terminals 100, and is generally an enumeration of alphabetic characters, numbers, and symbols. The same also applies to the settlement terminal ID. In order to avoid duplication of a large number of user IDs, the settlement device 200 (or the administrator thereof) may issue a user ID to each of the user terminals 100. The same also applies to the settlement terminal ID. Alternatively, an individual identification number embedded in the hardware of the user terminal 100 from the time of shipment can be used as the user ID. The same also applies to the settlement terminal ID.

The administrator of each of the user terminals 100 inputs the user ID for the user terminal 100 by operating the input device. Note that such an input is not necessary when the individual identification number is used as the user ID. Data of the user ID is sent from the input device to the interface 114 and sent from the interface 114 to the control unit 120. The data input/output unit 123 of the control unit 120 receives the data and sends it to the main control unit 121. The main control unit 121 retains the data, or records it in the main control unit 121.

On the other hand, the main control unit 121 sends the user ID data to the data input/output unit 123. The user ID data is sent from the data input/output unit 123 to the transmission and reception unit, and then sent to the settlement device 200 via the network 400.

The settlement device 200 receives the user ID data at the transmission and reception unit. The user ID data is sent from the transmission and reception unit to the interface 214 and is sent from the interface 214 to the control unit 220. The data input/output unit 221 of the control unit 220 receives the data, and sends it to the main control unit 222. The main control unit 222 retains the data, or records it in the main control unit 222. When all the user terminals 100 perform this processing, the main control unit 222 has a list of all the user terminals 100. Using such a list, the settlement device 200 specifies that the virtual currency data is generated for anybody (who owns any user terminal 100).

The administrator of each of the settlement terminals 300 inputs the settlement terminal ID for the settlement terminal 300 by operating the input device. Data of the settlement terminal ID is sent from the input device to the interface 314, and then is sent from the interface 314 to the control unit 320. The data input/output unit 323 of the control unit 320 receives the data and sends it to the main control unit 321. The main control unit 321 retains the data, or records it in the main control unit 321.

On the other hand, the main control unit 321 sends the data of the settlement terminal ID to the data input/output unit 323. The data of the settlement terminal ID is sent from the data input/output unit to the transmission and reception unit, and is sent to the settlement device 200 via the network 400.

The settlement device 200 receives the data of the settlement terminal ID at the transmission and reception unit. The data of the settlement terminal ID is sent from the transmission and reception unit to the interface 214, and is sent from the interface 214 to the control unit 220. The data input/output unit 221 of the control unit 220 receives the data and sends it to the main control unit 222. The main control unit 222 retains the data, or records it in the main control unit 222. When all the settlement terminals 300 perform this processing, the main control unit 222 has a list of all the settlement terminals 300. Using such a list, the settlement device 200 specifies that payment (settlement) is accepted for anybody (administrator of any settlement terminal 300) .

First, the virtual currency data is generated.

Although not limited thereto, in this embodiment, generation of the virtual currency data starts from a point where the user starts generation of generation request information (S911).

In order to start the generation of the generation request information, for example, the user may touch an icon (not shown) displayed on the display 101. Then, the operation content is sent from the input device 102 to the main control unit 121 via the interface 114 and the data input/output unit 123, and the generation of the generation request information is started.

The generation request information is generated when the user operates the input device 102 of the user terminal 100. The generation request information includes at least a user ID and an amount of money that the user intends to use for payment.

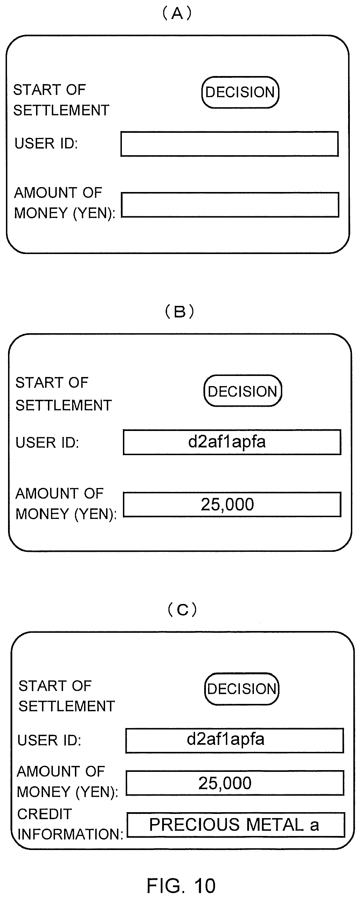

When the generation of the generation request information is started, the main control unit 121 sends an instruction to the display control unit 122 to display an image for urging the user to input the user ID or the like on the display 101. The display control unit 122, which has accepted this instruction, displays, on the display 101, an image for urging the user to input the user ID and the amount of money for which the user intends to perform the payment, as shown in FIG. 10(A), for example. The user inputs the user ID on the right side of a field indicated as "User ID", and inputs the amount of money for which the user intends to pay on the right side of a field indicated as "Amount of money (yen)", respectively (S912). Data on the user ID and the amount information, which is information for specifying the amount of money, input by the user is input from the input device 102 to the data input/output unit 123 via the interface 114, and sent to the main control unit 121. Since the user ID and the amount information, which are input by the user, are displayed on the display 101, also including during the input, under control of the display control unit 122 controlled by the main control unit 121, the user can input the user ID and the amount information while checking the display 101. According to an example shown in FIG. 10(B), the user intends to pay 25,000 yen using this settlement system.

When the input of the user ID and the amount information is completed, the user clicks a button of "Decision" displayed on the display 101.

When the user clicks the button of "Decision", the user ID and the amount information are sent from the data input/output unit 123 to the main control unit 121. The main control unit 121 collects the user ID and the amount information to use it as generation request information. Note that the generation request information may include other types of information.

The generation request information is sent from the main control unit 121 to the data input/output unit 123, and is sent from the data input/output unit 123 to the transmission and reception unit. The generation request information is sent from the transmission and reception unit to the settlement device 200 via the network 400 (S913).

As in the case hereinafter, all communications performed via the network 400 in this embodiment may be encryption communications. Techniques used for encryption and decryption in this case can be publicly known or well-known.

The settlement device 200 accepts the data of the generation request information at the transmission and reception unit (S921). The transmission and reception unit sends the data of the generation request information to the data input/output unit 221, and the data input/output unit 221 sends the data to the main control unit 222.

Although not necessarily limited to this, the main control unit 222 in this embodiment performs credit determination, which is determination as to whether virtual currency data may be generated with respect to the user terminal 100 specified by the user ID (S922). As will be described below, if there is no particular problem, the settlement device 200 issues virtual currency data to the user terminal 100, but since the virtual currency data is data having a monetary value, determination as to whether such data may be issued to the user, who has sent the generation request information, is performed. When such credit determination is performed, the credibility of virtual currency data issued thereafter is improved.

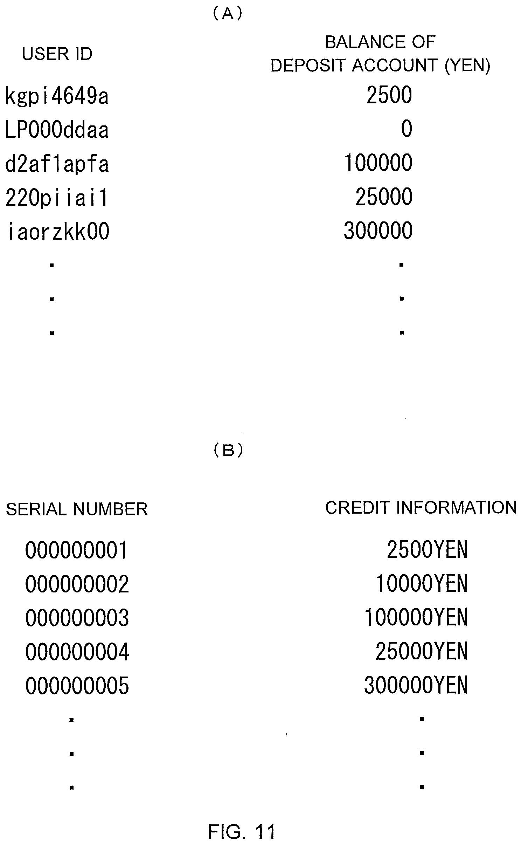

In the embodiment, the data recorded in the credit information recording unit 224B is used, but is not limited thereto. The balance of the deposit account of each user is record in the credit information recording unit 224B of the embodiment, but is not limited thereto. As shown in FIG. 11(A), the deposit account of each user is associated with the user ID. The balance of the deposit account of each user is the amount of money obtained by deducting the amount of money used to generate the credit information as will be described below from the amount of money paid in advance to the administrator or the like of the settlement device 200 by each user (including a case of being paid several times). According to FIG. 11(A), the balance of the deposit account of the user whose user ID is d2aflapfa is 100,000 yen. The main control unit 222 reads the balance of the deposit account associated with the user ID from the credit information recording unit 224B.

For example, the main control unit 222 compares the amount of money specified by the amount information with the read deposit account balance to perform the credit determination. For example, when the amount of money specified by the amount information is smaller than the balance of the deposit account at that time, the main control unit 222 can accept the credit. Upon accepting the credit, for example, the main control unit 222 deducts the amount of money (25,000 yen in the embodiment) specified by the amount information from the balance of the deposit account, and moves the deducted amount of money to an account managed by the administrator or the like of the settlement device 200. Thus, the administrator or the like of the settlement device 200 can pay the amount of money specified by the amount information or be responsible for the payment, regardless of whether to create a structure for the administrator of the settlement device 200 to follow the responsibility to make the payment, and thus, the virtual currency data having a value specified by the amount information and generated as will be described below becomes extremely high in reliability. In this case, the money of the amount of money deposited in the deposit account or the money moved to the account of the administrator or the like of the settlement device 200 from the deposit account has a character such as deposit or collateral for the virtual currency data, or will be collateral or deposit itself.

Note that a credit determination method is merely an example in which the main control unit 222 accepts the credit when the amount of money specified by the amount information is smaller than the balance of the deposit account at that time, and, for example, the main control unit 222 can accept the credit when 80% or 50% of the amount of money specified by the amount information is smaller than the balance of the deposit account at that time or other rules can be set. For example, if the credit is accepted when 80% of the amount of money specified by the amount information is smaller than the balance of the deposit account at that time, the main control unit 222 can deduct 80% of the amount of money from the balance of the deposit account, or can also deduct the amount of money itself specified by the amount information from the balance of the deposit account. Further, it is also possible to apply different rules depending on the case of generating the virtual currency data (for example, depending on the time or the user).

Alternatively, when the user terminal 100 sends the generation request information to the settlement device 200, the settlement device 200 urges the user, who operates the user terminal 100 sent the generation request information, to pay the amount of money specified by the amount information transmitted in a state of including the generation request information (or a part of the amount of money, for example, 80% or 50% of the amount of money). When it is confirmed that the user pays the amount of money to the administrator of the settlement device 200 from, for example, the user terminal 100 with a credit card (the payment through the online by the credit card is publicly known or well-known), the main control unit 222 of the settlement device 200 may determine that the credit of the user is accepted. Even in this case, the money having the property of deposit or collateral is accumulated in the account of the administrator or the like of the settlement device 200 as in the case of the above-described example.

In any case, when the credit of the user is accepted, the main control unit 222 generates the credit information, adds the credit information to the amount information included in the generation request information sent by the user, and sends it to the virtual currency data generating unit 223.

In the embodiment, the credit information may be information that "a cash of 25,000 yen is entrusted to the administrator or the like of the settlement device 200" or information referred simply to as "25,000 yen". More specifically, when an actual item of the money (for example, banknotes) entrusted to the administrator or the like of the settlement device 200 exists, it can be also considered that the serial number of the banknote is further attached or, for example a part of the image of the banknote is further attached. In the embodiment, it is assumed that the credit information is the information referred as "25,000 yen" in the example of the embodiment, which indicates how much money is entrusted to the administrator of the settlement device 200.

The virtual currency data generating unit 223, which has received the amount information and the like, generates virtual currency data (S923).

The virtual currency data includes at least virtual currency encryption data (which will be described below) that is obtained by encryption of the original data including the issue subject information and the amount information. First of all, in the embodiment, the original data includes the credit information in addition to the issue subject information and the amount information.

Further, as described above, the virtual currency data generating unit 223 uses the data recorded in the basic data recording unit 224A when generating the virtual currency data. In order to describe a method of generating the virtual currency data, first, the data recorded in the basic data recording unit 224A will be described.

The data recorded in the basic data recording unit 224A in the embodiment is information that can be the issue subject information.

The issue subject information is generally information indicating circumstances of issue including the issuer of the virtual currency data. The information capable of being the issue subject information is, for example, issuer information, which is information for specifying the settlement device 200 being an issuer of the virtual currency data, and is, for example, an IP address of the settlement device 200. Note that a sender of the generation request information can be an issuer, and, in this case, the issuer information is an IP address of the user terminal 100. Another example of information that can be issue subject information is authentication information that is issued by a person who has the authority to guarantee authenticity of the virtual currency data, for example, a government organization and is information for guaranteeing the authenticity of the virtual currency data. Still another example of information that can be issue subject information is serial number information that is information unique to each virtual currency data for distinguishing the virtual currency data from other virtual currency data. The issue subject information may include another information, or may include data that is not recorded in the basic data recording unit 224A as will be described below. Of these, what is essential is only information for specifying the issuer of the virtual currency data (in this embodiment, it is assumed to be user terminal 100.). Further, information other than the authentication information and the serial number information may be recorded in the basic data recording unit 224A, as information that can be the issue subject information.

The serial number information described above will be complementally described. The serial number information is information on the serial number. For example, banknotes issued by the Japanese government (precisely, the Bank of Japan) are recorded with serial numbers that are enumerated by numbers and alphabets. Similarly, in order to distinguish between the previously issued virtual currency data and the newly issued virtual currency data, each virtual currency data may include serial number information in an encrypted state. The serial number information is, for example, a serial number of a multi-digit number starting from 1 (for example, 1,000-digit number) represented in hexadecimal notation as in the serial number printed on banknotes issued by the Japanese government. The basic data recording unit 224A is recorded with, as the serial number information, the serial number information next to the serial number information included in the virtual currency data issued immediately before. The serial number information is rewritten as will be described below.

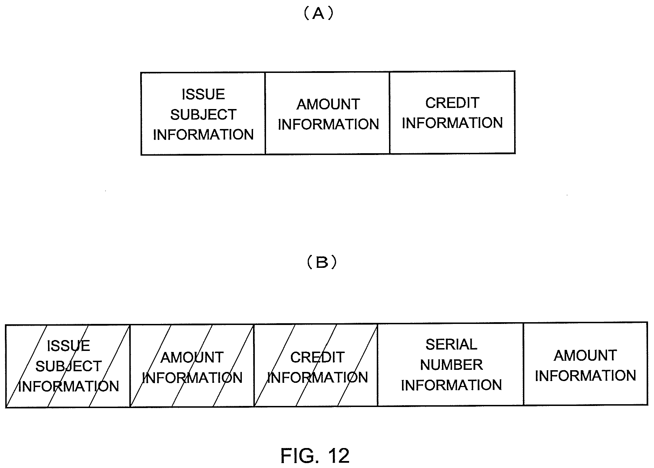

The virtual currency data generating unit 223, which has received the amount information or the like, reads the information that can be the issue subject information recorded in the basic data recording unit 224A when generating the virtual currency data. Original data (see FIG. 12(A)) that are data obtained by combination of the issue subject information, the amount information, and the credit information (although not necessarily in this order) is generated.

The issue subject information in this embodiment includes issuer information that is information for specifying the settlement device 200 that is the issuer of the virtual currency data, authentication information, serial number information, and timing information, but is not limited thereto. When reading the serial number information, the virtual currency data generating unit 223 overwrites the serial number information recorded in the basic data recording unit 224A with "+1". Thus, the serial number information is always kept up-to-date. In addition, the timing information indicates a time at which the virtual currency data generating unit 223 generates such virtual currency data (for example, a time at which the virtual currency data generating unit 223 receives the amount information or the like) in units of seconds, for example. In order to make this, the virtual currency data generating unit 223 always receives date and time information from a clock (not shown) included in the settlement device 200.

In this embodiment, the amount information is information for specifying the amount of money of 25,000 yen as described above. Naturally, the amount of money is not limited to 25,000 yen, and the unit of money is not limited to yen. Furthermore, the unit of money need not be the same as the legal currency, and may be a unit specific to the virtual currency data.

Then, original data shown in FIG. 12(A) is encrypted by the encryption unit 223A in the virtual currency data generating unit 223 and converted into virtual currency encryption data. The encryption method may be publicly known or well-known, but it is necessary to able to perform decryption by at least an appropriate method in this embodiment.

The virtual currency data generating unit 223 sequentially generates virtual currency data according to a large number of requests from a large number of users. For the sake of description in FIG. 12(B), it is assumed that the encrypted portion of the data structure is subjected to shading. Although not limited thereto, in this embodiment, the encryption method executed in the process of generating the virtual currency data is also applied to a case of generating any virtual currency data. In this embodiment, the encryption method is applied even in the case of generating any virtual currency data by making the algorithm and key used to encryption unchanged.

By the way, as described above, in this embodiment, the original data to be encrypted includes serial number information and timing information on the premise that the content is changed. In particular, there is no same serial number information. Therefore, there is also no same virtual currency encryption data. The virtual currency encryption data is formed by alphabetic characters, numbers, symbols, or a combination of two or more thereof, and is enumerated by characters having a certain number of characters (for example, 1,000-digit number) or more (or the number of digits).

When the encryption unit 223A generates the virtual currency encryption data, the virtual currency encryption data is sent to the combination unit 223B. The combination unit 223B combines a predetermined one of the original data encrypted and included in virtual currency encryption data, that is, a predetermined one of the issue subject information, the amount information, and the credit information included in the original data with the virtual currency encryption data in plaintext. Virtual currency data is obtained by combining the above-described plaintext data with the virtual currency encryption data. Information added to the virtual currency encryption data may be a part or all of the issue subject information, the amount information, and the credit information, or may include other types of information, but is the serial number information and the amount information in the embodiment. The content of the serial number information and the amount information in plaintext can be grasped not only by the settlement device 200 but also by the user terminal 100 or the settlement terminal 300 without any special processing (because of being readable, the content is understood by reading). When a malicious third party obtains the virtual currency data, the malicious third party can also read the plaintext data, but cannot grasp all the contents of the data that is encrypted and included in the virtual currency encryption data, so that the malicious third party is difficult to misuse the virtual currency data.

The generated virtual currency data is sent from the virtual currency data generating unit 223 to the main control unit 222.

The main control unit 222, which has received the virtual currency data, records the credit information in the credit information recording unit 224B in a state where the correspondence relation between the virtual currency data and the credit information included in an encrypted state in the virtual currency encryption data included in the virtual currency data can be grasped. As described above, the credit information is originally generated by the main control unit 222 and is sent from the main control unit 222 to the virtual currency data generating unit 223. On the other hand, the main control unit 222 retains the credit information until the virtual currency data is sent back from the virtual currency data generating unit 223. Then, the main control unit 222 associates the retained credit information with the serial number included in the virtual currency data in which the encrypted credit information is included in the virtual currency encryption data, and records the retained credit information in the credit information recording unit 224B. As shown in FIG. 11(B), the serial number is recorded in the credit information recording unit 224B in association with the credit information. Note that the information to be recorded in the credit information recording unit 224B is each virtual currency data and credit information used as a basis for the credit of each virtual currency data, and the correspondence relation between the virtual currency data and the credit information can be grasped. Therefore, the information to be recorded in association with the credit information is not the serial number, but may be the virtual currency data itself or the virtual currency encryption data, for example.

In addition, the main control unit 222 instructs the user terminal 100, which is specified by the user terminal ID attached to the generation request information serving as an application for generating the virtual currency data, to return the virtual currency data, and sends the virtual currency data to the data input/output unit 221. The virtual currency data is further sent to the transmission and reception unit and sent to the user terminal 100 specified by the user ID, via the network 400 (S924).

The transmission and reception unit of the user terminal 100 receives the sent virtual currency data (S914). The received virtual currency data is sent from the data input/output unit 123 to the main control unit 121.

The virtual currency data can be used in this state. That is, the user, an owner of the user terminal 100, can pay to a third party using the virtual currency data. The user performs an operation for preserving the virtual currency data using the input device 102. Then, the operation content of the purport is sent from the input device 102 to the main control unit 121 via the interface 114 and the data input/output unit 123. The virtual currency data is sent from the main control unit 121 to the user terminal recording unit 124, and is recorded in the user terminal recording unit 124 that is a part of the RAM 113 when viewed as hardware. The same user can naturally store a plurality of virtual currency data in his/her user terminal 100. In this case, the plurality of virtual currency data is recorded in the user terminal recording unit 124.

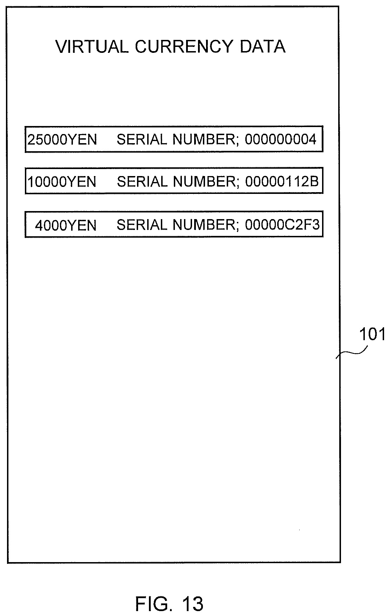

The user can use the virtual currency data preserved in the user terminal 100 for payment at any time. When the user wants to use the virtual currency data, the user operates the input device 102 of the user terminal 100 to input the purport. Such an input is input to the main control unit 121 via the interface 114 and the data input/output unit 123. Upon receiving the input, the main control unit 121 reads, for example, all the virtual currency data from the user terminal recording unit 124, and, based on the data, instructs the display control unit 122 to display the image as shown in FIG. 13 .

As shown in FIG. 13, the plurality of virtual currency data is displayed on the display 101 so that one of them can be selected. The displays including the amount of money surrounded by a square frame correspond to the virtual currency data, respectively. As described above, the data of the virtual currency data include the encrypted virtual currency encryption data and the respective plaintext serial number information and amount information. Since the user terminal 100 can read plaintext information, the user terminal 100 can display information based on the information described in plaintext on the display 101, as an image corresponding to each virtual currency data. In this embodiment, although not limited thereto, the amount of money specified by the amount information and the information on the serial number are displayed on the display 101. Note that the image displayed on the display 101 can include a display based on all of the data described in plaintext, but need not include a display based on all of the data described in plain text or may not be displayed at all based on the data described in plaintext.

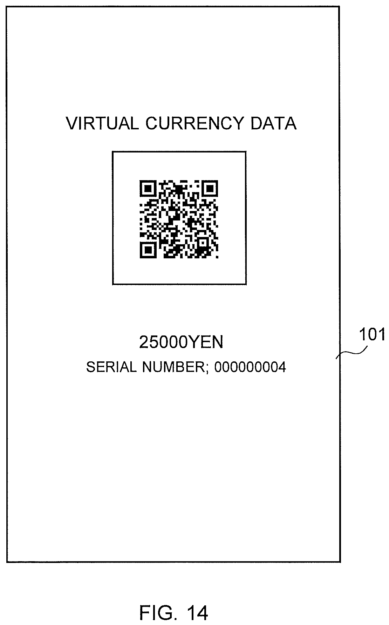

The user operates the input device 102, which is one of functions of the display 101, to select virtual currency data used for payment. Such an input is input to the main control unit 121 as described above. Then, the display on the display 101 is switched as shown in FIG. 14. Under the control of the main control unit 121, the display control unit 122 displays on the display 101 a display corresponding to the virtual currency data (or obtained by reversibly converting the virtual currency encryption data), and more specifically, a display obtained by converting the virtual currency data into a two-dimensional barcode. Information included in such a two-dimensional barcode needs to correspond to the virtual currency encryption data at a minimum, but, in this embodiment, is assumed to correspond to the entire virtual currency data.

The user is a counterpart who makes payment, and delivers the virtual currency data from the user terminal 100 to the settlement terminal 300 managed by a clerk of a store, for example (S915).

The virtual currency data is delivered by capturing the image of the two-dimensional barcode displayed on the display 101 of the user terminal 100 with a camera provided in the settlement terminal 300. The captured image data is sent from the camera of the settlement terminal 300 to the data input/output unit 323 via the interface 314 and then sent from the data input/output unit 323 to the main control unit 321. The main control unit 321 generates virtual currency encryption data from the two-dimensional barcode reflected in the image data. Thereby, the virtual currency data is delivered from the user terminal 100 to the settlement terminal 300 (S931).

The virtual currency data is delivered from the user terminal 100 to the settlement terminal 300 by reading of the two-dimensional barcode in this embodiment, but the virtual currency data may be delivered using not only the two-dimensional barcode but also a one-dimensional barcode or another identifier. Furthermore, the virtual currency data is not required to be delivered from the user terminal 100 to the settlement terminal 300 by reading of such an identifier, and may be delivered by transmission of the virtual currency data itself through Bluetooth (trademark) or another communication. In an extreme case, the virtual currency data may be delivered in a manner that the user verbally tells to the administrator or the like of the settlement terminal 300 or the virtual currency data is displayed on the display 101 and shown to the administrator or the like of the settlement terminal 300. In this case, the administrator or the like of the settlement terminal 300 may input the virtual currency data to the settlement terminal 300 by manually inputting the data using the input device, for example.

In any case, the main control unit 321 temporarily records the virtual currency data, for example, at least until payment due to the virtual currency data is completed. Such recording is performed on the RAM 313 as hardware. As described above, the settlement terminal 300 can read serial number information and amount information described in plaintext in the virtual currency data. Accordingly, the main control unit 321 can cause the display control unit 322 to display the information (shown in FIG. 14), which is specified by these types of information, on the display. For example, the administrator or the like of the settlement terminal 300 can check the amount of payment to be expected by displaying the amount of money specified by the amount information. When the payment is inappropriate, the administrator or the like of the settlement terminal 300 may receive other virtual currency data from the user.

When the virtual currency data received from the user is appropriate, the administrator or the like of the settlement terminal 300 operates the input device of the settlement terminal 300 to perform an operation for sending the virtual currency data to the settlement device 200.

When such an operation is performed, the operation content is sent from the input device to the main control unit 321 via the data input/output unit 323. When the operation content is input, the main control unit 321 sends data, which is obtained by imparting the settlement terminal ID to the virtual currency data, to the data input/output unit 323. The data input/output unit 323 sends the data to the transmission and reception unit, and the transmission and reception unit sends the data to the settlement device 200 via the network 400 (S932). At this time, at least virtual currency encryption data needs to be sent to the settlement device 200 together with the settlement terminal ID, but in this embodiment, the entire virtual currency data is sent to the settlement device 200 together with the settlement terminal ID.

The settlement device 200 receives the data of the settlement terminal ID and the virtual currency data at the transmission and reception unit (S925). These data are sent to the main control unit 222 via the interface 214 and the data input/output unit 221.

The main control unit 222, which has received such data, sends the data of the settlement terminal ID and the virtual currency data to the decryption unit 225. At this time, at least the virtual currency encryption data needs to be sent to the decryption unit 225 together with the settlement terminal ID, but the entire virtual currency data is sent to the decryption unit 225 together with the settlement terminal ID in this embodiment.

The decryption unit 225 decrypts the virtual currency encryption data (S926). As described above, since the encryption unit 223A performs the same encryption processing on all the virtual currency encryption data, the decryption unit 225 also performs the same decryption processing corresponding to the encryption processing. When the virtual currency encryption data is decrypted, the encrypted issue subject information, amount information, and credit information are returned in the form of plaintext. That is, the virtual currency encryption data returns to the plaintext original data. The decryption unit 225 sends the original data to the settlement determination unit 226 together with the data of the settlement terminal ID.

In this embodiment, due to the fact that the virtual currency encryption data can be decrypted by the decryption unit 225, it is possible to temporarily determine that the virtual currency encryption data and the virtual currency data including the virtual currency encryption data are authentic. When the decryption of the virtual currency encryption data cannot be performed, information indicating the purport thereof is sent to the settlement determination unit 226 from the decryption unit 225.

The settlement determination unit 226 receives the original data and the settlement terminal ID, or information indicating that the decryption of the virtual currency encryption data cannot be performed, from the decryption unit 225.

Upon receiving the original data and the settlement terminal ID among the information, the settlement determination unit 226 executes a final determination (S927). In a case of executing the final determination, the settlement determination unit 226 reads necessary data from the basic data recording unit 224A.

As described above, the issue subject information includes the information for specifying the settlement device 200 that is the issuer of the virtual currency data. Since the same data is recorded in the basic data recording unit 224A, the settlement determination unit 226 reads the data from the basic data recording unit 224A, and compares with both data. When both data coincide with each other, the settlement determination unit 226 determines that the virtual currency encryption data is authentic.

As described above, the issue subject information may include the authentication information that is issued by a person who has the authority to guarantee authenticity of the virtual currency data, for example, a government organization. When such data is used for authentication, since information for authentication also exists in the basic data recording unit 224A, the settlement determination unit 226 reads the data from the basic data recording unit 224A, and compares both information for authentication with each other. When both information for authentication coincide with each other, the settlement determination unit 226 determines that the virtual currency encryption data is authentic.

Similarly, the serial number information, the timing information, the amount information, the credit information and the like may be used to determine the authenticity of the virtual currency encryption data. However, since the confirmation that the virtual currency encryption data is authentic is actually performed by the fact that the virtual currency encryption data can be decrypted by the decryption unit 225, the confirmation of the authenticity of the virtual currency encryption data may be omitted herein.

In any case, when the settlement determination unit 226 determines that the virtual currency encryption data is authentic, the settlement determination unit 226 generates final determination data indicating positive information that the payment of the amount of money specified by the amount information is accepted.

On the other hand, in cases where: the settlement determination unit 226 receives, from the decryption unit 225, the information indicating that the decryption of the virtual currency encryption data cannot be performed; and the determination is not performed that the virtual currency encryption data is authentic, the settlement determination unit 226 generates final determination data indicating negative information that payment of the amount of money specified by the amount information is not accepted.

In any case, the generated final determination data is sent from the settlement determination unit 226 to the main control unit 222.

The main control unit 222 receives the final determination data and performs the following processing.

When the final determination data is positive, the main control unit 222 executes a process of paying the amount of money specified by the final determination data to the administrator of the settlement terminal 300. The settlement processing is a process of accepting the payment of the money to the settlement terminal 300 that has sent the virtual currency encryption data. In this embodiment, the main control unit 222 retains data indicating what kind of settlement has been made. For example, the main control unit 222 is configured to cause a recording medium (not shown) for each settlement terminal 300 to record information indicating how much payment is finally permitted to who (administrator or the like of which settlement terminal 300). These data is sent, for example, to the bank where the bank account specified by the administrator of the settlement terminal 300 exists, and as a result, payment is made to the administrator of the settlement terminal 300 from, for example, the administrator (or, from the bank account or the like specified by the user using the virtual currency data) of the settlement device 200.

When the final determination data is positive, the main control unit 222 generates positive determination result data that is data including at least information on the fact that payment has been made and the amount of money.

On the other hand, when the final determination data is negative, the main control unit 222 does not perform the settlement processing. Further, the main control unit 222 generates negative determination result data that is data including at least information that payment has not been made.

In any case, the determination result data is sent from the main control unit 222 to the transmission and reception unit via the data input/output unit 221 and is transmitted to the settlement terminal 300 via the network 400 (S928). Although the transmission of the determination result data to the settlement terminal 300 can be omitted, but will be normally performed.

The determination result data is received by the transmission and reception unit of the settlement terminal 300 (S933).

The determination result data received by the transmission and reception unit is sent to the main control unit 321 as in the previous cases.

The main control unit 321 instructs the display control unit 322 to display on the display according to the determination result data. As a result, the display control unit 322 causes the display to display according to the determination result data (S934). Although not shown, the display will include, for example, the fact that the payment is accepted and the amount of money in the case where the determination result data is positive, and include the fact that the settlement is not accepted in the case where the determination result data is negative. In the latter case, the determination result data includes the information for specifying the reason why the settlement is not accepted, and thus the reason why the settlement is not accepted is desirably displayed on the display.

The determination result data can also be transmitted to the user terminal 100, and the image based on the determination result data can be displayed on the display 101 even in the user terminal 100.

Thus, the payment processing using the virtual currency data from the user to the administrator of the settlement terminal 300 is completed.

In the above description, the recipient of payment due to the virtual currency data using a certain user terminal 100 is only the administrator or the like of the settlement terminal 300. However, a recipient of payment due to the virtual currency data using a certain user terminal 100 can be a user of another user terminal 100.

In this case, the user terminal 100 owned by the user who receives the payment may have the same functional blocks as those of the settlement terminal 300 by installing the same computer program as that installed in the settlement terminal 300. This is possible when the user terminal 100 is a smartphone including a computer. In addition, although the settlement terminal 300 is equipped with the camera as hardware, the user terminal 100 has a camera in common sense when being a smartphone, and thus the user terminal 100 also satisfies the conditions. In this case, the basic data recording unit 224A of the settlement device 200 will be required to be recorded with the data, which are equivalent to various data recorded in association with the settlement terminal ID of each settlement terminal 300, in association with the user ID of each user terminal 100.

In this embodiment, the virtual currency data is delivered from the user terminal 100 to the settlement terminal 300 without using the network 400. However, regardless of whether such a delivery is a delivery of the virtual currency data from the user terminal 100 to the settlement terminal 300 or a delivery of the virtual currency data between the user terminals 100, such a delivery may be realized by transmission/reception of the virtual currency data via the network 400 (in some cases, transmission/reception via the settlement device 200 to prevent double transfer of the virtual currency data). Further, the virtual currency data can be simply transferred between two user terminals 100, between the user terminal 100 and the settlement terminal 300, or two settlement terminals 300, without settlement processing in the settlement device 200. In this case, for example, when the virtual currency data is transferred between the user terminals 100, the user as a transferor inputs transfer information for transferring the virtual currency data to the user terminal 100 of the transferor. The transfer information includes at least the contents of which virtual currency data is transferred to which person. The user as a transferee can be designated by the user ID, for example. When such transfer is performed through the settlement device 200, the problem of double transfer of the virtual currency data can be prevented. The transfer information is sent from the user terminal 100 operated by the user as the transferor to the settlement device 200 via the network 400 together with the virtual currency data, for example. The settlement device 200 sends the virtual currency data to the user terminal 100 designated by the user ID. Thus, the virtual currency data is transferred or moved from the user terminal 100 of the user who is the transferor to the user terminal 100 of the user who is the transferee. The virtual currency data is recorded in the user terminal recording unit 124 by the main control unit 121 in the user terminal 100 of the user who is the transferee.

In the embodiment, the user having the user terminal 100 which has received the virtual currency data from the settlement device 200 or the user terminal 100 to which the virtual currency data is transferred from a certain user terminal 100 can confirm the credit information included in the encrypted state in the virtual currency encryption data in each virtual currency data recorded in the user terminal 100 which has received the virtual currency data. For example, in the embodiment, the confirmation of the credit information can be made when browsing request information is sent from the user terminal 100 to the settlement device 200. The browsing request information includes information for specifying virtual currency data that the user desires to confirm the credit information. The information for specifying virtual currency data that the user desires to confirm the credit information may be the virtual currency data itself that the user desires to confirm the credit information, but may be virtual currency encryption data included in the virtual currency data or serial number information included in the virtual currency data. As shown in FIG. 13, the display 101 of the user terminal 100 can display the serial number of each virtual currency data. Therefore, the serial number information can be included in the browsing request information by each user. When the user operates the input device 102 to select a serial number (may select a plurality of serial numbers), serial number information on the selected serial number is sent from the data input/output unit 123 to the main control unit 121. Then, the main control unit 121 generates browsing request information to which the received serial number information is added. The browsing request information added with the serial number information is sent from the data input/output unit 123 to the transmission and reception unit, and is sent from the transmission and reception unit, via the network 400, to the settlement device 200. Upon receiving the browsing request information added with the serial number information at the transmission and reception unit, the settlement device 200 sends it from the data input/output unit 221 to the main control unit 222. Then, the main control unit 222 of the settlement device 200 reads the credit information associated with the serial number specified by the serial number information added to the browsing request information, from the credit information recording unit 224B. Then, the read credit information is sent to the user terminal 100 in association with the serial number information associated with the credit information through proceeding and reverse steps by the main control unit 222. The main control unit 121 of the user terminal 100 receives the information sent from the main control unit 222. The main control unit 121 causes the display 101 to display the serial number specified by the serial number information and the virtual currency data corresponding to the serial number in association with each other. Such an image is displayed on the display 101 according to image data generated by the display control unit 122 based on an instruction from the main control unit 121. The user observes the display on the display 101, and thus can confirm the credit information used as a basis for the credit of the virtual currency data (in some cases, a plurality of pieces) that the user desires to confirm, in a state where the credit information is associated with each of the virtual currency data.

Note that in the embodiment, the settlement device 200 functions as the virtual currency data issuing device of the present invention having the function of issuing the virtual currency data and sending it to the outside, the settlement device of the present invention having the function of receiving the virtual currency data and determining whether the settlement is permitted, and the credit information recording device of the present invention having the function of recording the credit information, but the virtual currency data issuing device, the settlement device of the virtual currency data, and the credit information recording device can also be separated from each other, which have these functions, respectively.

In this case, all the three devices can be the same as the settlement device 200 described above as the hardware configuration; and regarding the functional block, the virtual currency data issuing device has a functional block having a function necessary until the virtual currency data is sent to the user terminal 100, the settlement device has a functional block having a function necessary for the subsequent settlement of the virtual currency data, and the credit information recording device has a functional block necessary for recording the credit information and responding to the browsing request information.

<Modification Example 1>

A settlement system according to Modification Example 1 is almost the same as the settlement system according to the first embodiment. In particular, the configuration of the user terminal 100 and the settlement terminal 300 and the process executed therein are no different from those in the first embodiment. Furthermore, the data structure of the virtual currency data is the same as that in the first embodiment.

The configuration of the settlement device 200 and the process executed therein are different from those in the first embodiment. Nevertheless, the configuration of the settlement device 200 according to Modification Example 1 and the process executed therein are mostly the same as those in the first embodiment.

In the settlement system of the first embodiment, the encryption method used by the encryption unit 223A to generate the virtual currency encryption data included in each of the multiple virtual currency data is identically applied to all the cases of generating the virtual currency encryption data. On the other hand, in this modification example 1, a plurality of encryption methods are executed to obtain virtual currency encryption data.

Then, if the decryption unit 225 cannot know which of the plurality of encryption methods is used to encrypt the virtual currency encryption data when trying to decrypt a certain virtual currency encryption data, the decryption unit cannot perform the decryption processing. What makes this problem possible is the difference between the settlement device 200 of Modification Example 1 and the settlement device 200 of the first embodiment.

In this embodiment, the encryption performed by the encryption unit 223A is different for each virtual currency encryption data, but is not limited thereto. Therefore, the decryption processing performed for each virtual currency encryption data by the decryption unit 225 is also different. There are three types of methods for changing the encryption and decryption methods: changing an algorithm, changing a key, and changing both of the algorithm and the key. All of three types can be adopted, but the method for changing the key is adopted in this embodiment.

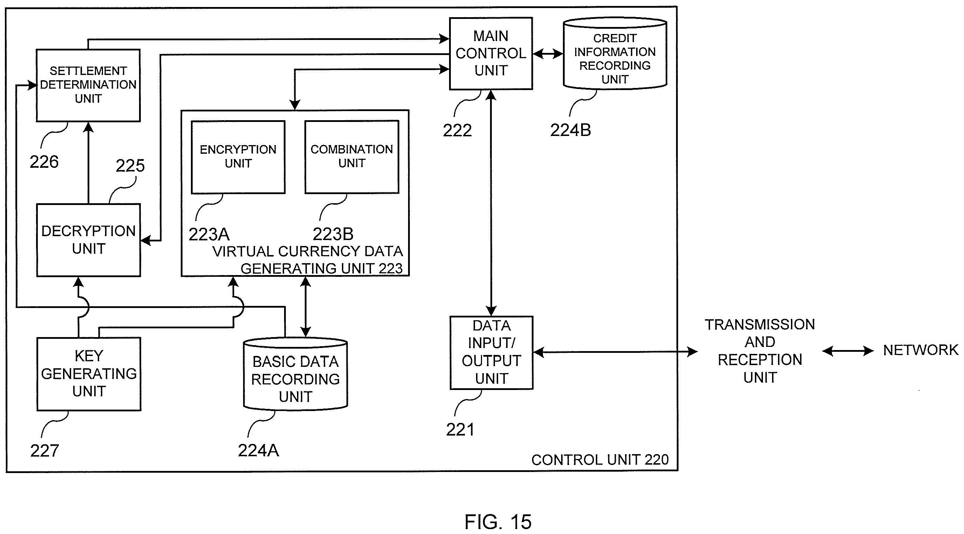

Even in the settlement device 200 of Modification Example 1, as described in the first embodiment, a control unit 220 serving as a functional block is generated therein by execution of a computer program. As shown in FIG. 15, functional blocks generated in the control unit 220 in Modification Example 1 are substantially the same as those in the first embodiment, and the functions carried out by the same functional blocks are the same as those in the first embodiment except for the encryption unit 223A and the decryption unit 225. The functional blocks generated in the control unit 200 in Modification Example 1 include a key generating unit 227, which is different from the first embodiment.

The key generating unit 227 generates a key used for encryption or decryption, and provides the key to the encryption unit 223A and the decryption unit 225. A method of generating the key and a timing for providing the key to the encryption unit 223A and the decryption unit 225 will be described.

A timing at which the key generating unit 227 supplies the key to the encryption unit 223A is a timing at which the encryption unit 223A performs the encryption processing. As described above, when the data shown in FIG. 12(A), that is, the plaintext original data including the issue subject information, the amount information, and the credit information is generated, the encryption unit 223A transmits data for requesting the key generating unit 227 to generate a key. Upon receiving the data, the key generating unit 227 generates a key and sends data of the generated key to the encryption unit 223A. The encryption unit 223A obtains virtual currency encryption data by encrypting the original data shown in FIG. 12(A) using an invariant algorithm and the provided key.

For example, the key generating unit 227 generates a key as follows. The key is generated as a "solution" in the following description, and is generated as an enumeration of at least one of alphabetic characters, numbers, and symbols. The solution can be, for example, a pseudo-random number sequence which is always the same under a certain condition and has initial value dependency. An example of the solution is a publicly known and well-known one-time password generation method in which one-time passwords are continuously generated from a certain initial value.

In order to generate the solution in this embodiment, a method of substituting a past solution into a predetermined function using a certain initial value (which may be two or more initial values) and thereby sequentially creating a new solution may be executed each time the solution is required. Thereby, the solution, which is the above "value", can be continuously generated. Such a solution becomes a pseudo-random number having initial value dependency.

Examples of the function used for creating the above-described "solution" include the following (a) to (c). Each of the following (a) to (c) is an expression for creating $X_N$ that is the N-th "solution". Moreover, P, Q, R, and S are natural numbers.

$$(a) \quad (X_N) = (X_{N-1})^P + (X_{N-2})^Q$$

$$(b) \quad (X_N) = (X_{N-1})^P$$

$$(c) \quad (X_N) = (X_{N-1})^P (X_{N-2})^Q (X_{N-3})^R (X_{N-4})^S$$

The expression (a) generates a new "solution" using past two "solutions" to add them raised to the P-th power and the Q-th power, respectively. It should be noted that, precisely, when the past two "values" are used and the values raised to the P-th power and the Q-th power are added, the number of digits increases, and thus the new "solution" is actually generated by extracting the appropriate number of digits from the beginning of an obtained value, extracting the appropriate number of digits from the end of the value, or extracting the appropriate number of digits from an appropriate portion of the value or the like.

The expression (b) has a new "solution" using one past "solution" to arrange the number of digits of the value raised to the P-th power as described above.

The expression (c) has a new "solution" using four past "solutions" to take the product of them raised to the P-th power, the Q-th power, the R-th power, and the S-th power, respectively, and then arranging the number of digits as described above.

The above-described (a) to (c) are an example of an algorithm for generating the solution, and a change can be added to the algorithm when the solution is generated, for example, a change can also be added in which the above-described (a) to (c) are used in rotation or the like.

If the solution is generated by such a method, a first solution generated based on a certain initial value is always the same, a second solution generated is also always the same, and similarly an N-th solution generated is also always the same. This is the initial value dependency.

Using the solution generated as described above as a key, the encryption unit 223A encrypts the data shown in FIG. 12(A), and generates virtual currency encryption data. As in the case of the first embodiment, a combination unit 232B adds several plaintext data to the virtual currency encryption data, and thus virtual currency data is generated.

Such virtual currency data is sent from the settlement device 200 to the user terminal 100 as in the case of the first embodiment.

A method of using the virtual currency data is the same as in the first embodiment. The virtual currency data is delivered from the user terminal 100 to the settlement terminal 300 and is sent from the settlement terminal 300 to the settlement device 200 together with a settlement terminal ID.

The virtual currency data is sent from the main control unit 222 to the decryption unit 225 together with the settlement terminal ID as in the case of the first embodiment.

Here, as in the case of the first embodiment, the decryption unit 225 decrypts virtual currency encryption data. However, for this purpose, the decryption unit 225 needs to obtain the key used when the encryption unit 223A encrypts the virtual currency encryption data. Therefore, the decryption unit 225, which has received the virtual currency data, sends data for requesting the key generating unit 227 to generate key data. Then, the decryption unit 225 attaches serial number information, which is included in the virtual currency data in a plaintext state, to the data.

As described above, the serial number information of this embodiment is a serial number of a multi-digit number starting from 1 represented in hexadecimal notation. In other words, the number specified by such serial number information indicates what number key is generated to be used in a case of encrypting the virtual currency encryption data to be decrypted. Therefore, the key generating unit 227 continuously performs arithmetic operations to obtain the number-th solution specified by the serial number information using mathematical expressions (a) to (c). As a result, the key generating unit 227 can generate the same solution as the key used in a case of encrypting the virtual currency encryption data to which the serial number information is attached. Then, the key generating unit 227 sends the key, which is the generated solution, to the decryption unit 225.

Thus, the decryption unit 225 can perform the decryption processing using the key used when the encryption unit 223A encrypts the virtual currency encryption data. That is, in Modification Example 1, the serial number information also serves as the encryption condition information as referred to in the present invention.

Note that the encryption condition information included in the virtual currency data may be in plaintext, or may be in an encrypted state. However, in a case of encryption of the encryption condition information, the encryption method is identically applied to the encryption condition information included all of the virtual currency data in practice. The reason is because, if the encryption condition information included in each virtual currency data is encrypted by different methods (for example, different keys), a decryption condition (encryption condition when the encrypted encryption condition information is encrypted) is required in a case of decrypting each type of encryption condition information. In the settlement device 200, although not limited to this, the main control unit 222 encrypts the encryption condition information when the virtual currency data is generated and issued, and the main control unit 222 decrypts the encryption condition information when the settlement is performed. When the encryption method and the decryption method are the same, it is naturally possible for the same main control unit 222 to perform the encryption and the decryption. In Modification Example 1, the serial number information also serves as the encryption condition information, and when the serial number information is necessary to be kept in plaintext, it is necessary to prepare encryption condition information other than the serial number information as will be described below. Then, it is possible to keep the serial number information included in the virtual currency data in plaintext and to encrypt the encryption condition information included in the virtual currency data.

Subsequent processes are the same as those in the first embodiment.

In Modification Example 1, the serial number information is used as the encryption condition information as referred to in the present invention. That is, the serial number information, which is a part of the issue subject information, is also used as the encryption condition information.

Alternatively, for example, the serial number information is not used as the encryption condition information (in this case, the serial number information need not be a serial number.), and information different from the serial number information can be included in the virtual currency data in a plaintext state or in an encrypted state. The data is data serial number data indicating what number key is generated by the key generating unit 227 to be used when the virtual currency encryption data is generated.

In addition, the combination unit 223B adds the key itself used when the encryption unit 223A performs the encryption processing to the virtual currency encryption data encrypted by the key, and thus the encryption condition information can also be included in the virtual currency data. Since such virtual currency data is attached with a key that can be used to decrypt the virtual currency encryption data included in the virtual currency data, there is a risk that the virtual currency encryption data is decrypted by a malicious third party. However, unless the algorithm used for encryption and decryption is known to the third party, the malicious third party cannot decrypt the virtual currency encryption data, and thus tentative safety can be maintained. When the encryption condition information is the key itself, the decryption unit 225 can perform decryption using the key, and thus the decryption unit 225 needs not to receive the key from the key generating unit 227 when performing the decryption processing.

Note that the encryption condition information does not depend on the above description. For example, the solution is determined by the date and time when the above-described solution is generated. In other words, when the key generating unit 227 uses an algorithm, which can always reproduce the solution later if a certain date is specified, to generate the solution, the encryption condition information can be information for specifying the date and time when the solution used by the encryption unit 223A is generated by the key generating unit 227. When the decryption unit 225 notifies the key generating unit 227 of the date and time, the key generating unit 227 can generate the same solution as the key used for the encryption by the encryption unit 223A, and thus the decryption unit 225 receives the same key as the key used for the encryption by the encryption unit 223A, from the key generating unit 227.

<Modification Example 2>

A settlement system according to Modification Example 2 is almost the same as the settlement system according to the first embodiment, and particularly, the configuration of the user terminal 100 and the settlement terminal 300 and the process executed by it are no different from those in the first embodiment. Furthermore, the data structure of the virtual currency data is the same as that in the first embodiment.

Modification Example 2 is different from the first embodiment in the content of credit information. In Modification Example 2, variations of the credit information will be described, and the configuration and operation of the settlement system when each piece of credit information is employed will be described focusing on the configuration and operation of the settlement device 200.

In the first embodiment, the credit information is information for specifying a deposit provided to the administrator or the like of the settlement device 200 by the user who is the owner of the user terminal 100 or money having a character as collateral. The credit information may be plaintext information that supports the credit of the virtual currency data.

For example, if the country guarantees the value of the virtual currency data, the credit information may be a description or data that guarantees the mandatory currency power of the virtual currency data issued by the country. In the first embodiment, for example, when the settlement device 200 is requested to generate virtual currency data by a country or a person (or an organization including a central bank as an example) who is requested to generated virtual currency data from the country, the credit information can be a description or data that the country guarantees the mandatory currency power of the virtual currency data. For example, some Indian banknotes have the description "I PROMISE TO PAY THE BEARER THE SUM OF ONE HUNDRED RUPEES". Such data content can be used as credit information. Naturally, such an organization normally also serves as an administrator or the like of the settlement device 200, in such a case, as a condition for the settlement device 200 to generate virtual currency data, a process of sending generation request information from the user terminal 100 to the settlement device 200 can be omitted. In that case, for example, the above-described organization inputs an instruction (this corresponds to actual generation request information in this case.) to generate 100,000 pieces of virtual currency data of 10,000 yen from, for example, an input device (not shown) provided in the settlement device 200, and the instruction is sent from a data input/output unit 221 to a main control unit 222 to cause the settlement device 200 to execute the same processing as when the main control unit 222 receives the generation request information in the first embodiment. Thus, the settlement device 200 can generate 100,000 pieces of virtual currency data. In this case, the amount information corresponds to 10,000 yen, and the credit information corresponds to the description or data that guarantees the mandatory currency power of the virtual currency data. In addition, issue subject information may be the same as in the case of the first embodiment, but issuer specified by the issuer information is the country, the above-described organization, or the administrator or the like of the settlement device 200.

In this case, the virtual currency data is not sent to the user terminal 100 that has sent the generation request information as in the case of the first embodiment, but is temporarily recorded in an appropriate recording medium provided inside and outside the settlement device 200, and then the virtual currency data can be supplied to the market in the same way that the central bank supplies legal tender to the market.

In this case, the description or data, which guarantees the mandatory currency power of the virtual currency data, may be recorded, or may not be recorded in the credit information recording unit 224B. This is because even when such data is not recorded in the credit information recording unit 224B, the virtual currency data issued through the above-described process by the settlement device 200 has credit equivalent to legal tender, and it is considered that there is no particular meaning in recording the above-described credit information common to all the virtual currency data issued through the above-described process in the credit information recording unit 224B.

The credit information is not abstract information indicating the guarantee of the mandatory currency power, but may be information for specifying a predetermined asset that is an origin of credit for virtual currency data. For example, in the first embodiment, the deposit paid to the administrator or the like of the settlement device 200 from the user or the money having a character as collateral is an origin of credit for virtual currency data, but the information for specifying the money in the first embodiment corresponds to information for specifying the predetermined asset that is an origin of credit for virtual currency data.

The above-described asset can be existing or tangible object. Existing assets can be valuable "objects" regardless of movable or real property. The above-described money is an example of an existing object and an example of a tangible object. For example, it is assumed that a certain user requests the settlement device 200 to generate virtual currency data using a precious metal a, which is owned by the user and is a precious metal having a certain value, as basis for credit. In that case, the settlement device 200 generates virtual currency data using the precious metal a as basis for credit of the virtual currency data. In such a case, regardless of whether to send simultaneously with the generation request information, information indicating that the precious metal a is credit information is sent from the user terminal 100 to the settlement device 200 at any step. For example, it is assumed that an image displayed on a display 101 of the user terminal 100 when the generation request information is input to the user terminal 100 is as shown in FIG. 10(C). As shown in FIG. 10(C), the user can specify the asset, which is a target of the credit information, by inputting the content that the "precious metal a" is the asset to be a target of the credit information to the user terminal 100. For example, such a precious metal a can be deposited in advance with the administrator or the like of the settlement device 200 by the user, and can also be selected by the user from several deposited assets. According to the above-described example, when the transmission of the generation request information in Modification Example 2 is performed corresponding to the transmission of the generation request information in the first embodiment, the generation request information includes a user ID, amount information called 25,000 yen amount information, and credit information called the precious metal a.

The settlement device 200, which has received the generation request information, generates virtual currency data in the same manner as in the first embodiment, but in this case, the credit information included in the original data is, for example, "precious metal a". Similarly, the credit information recorded in the credit information recording unit 224B in association with the serial number is also "precious metal a".

Naturally, assets of movable properties as tangible objects are not limited to precious metals, but antiques, works of art, cars, and the like can be selected appropriately. Examples of assets of real properties as tangible objects include lands and buildings such as houses. Further, the assets may be intangible objects. Examples thereof are patent rights and bonds such as account receivables or rent claims.

An example of an asset also may include a buried resource. Such a resource can be called an existing asset, but at least not materialized.

In some of the buried resources, reserves have been grasped. By using a resource, which is known to be buried and has not yet been mined, as a basis for credit of virtual currency data, the credibility of the virtual currency data can be enhanced. Examples of resources in this case include fossil fuels such as crude oil, coal, and natural gas, metals including gold, silver, manganese, and other rare metals, gemstones such as diamond, ruby, and others, and nuclear fuels such as uranium and others. The following is an example of the resource being crude oil.

In many cases, crude oil exists in an oil field in a state of unmined crude oil of which reserves has been grasped. For example, assuming that the reserves of crude oil buried in a certain oil field (for example, oil field a) is one billion barrels. Then, for example, a certain country, which is an owner of the oil field a is assumed to be the administrator or the like of the settlement device 200 in the first embodiment. Then, the administrator or the like makes it possible for the settlement device 200 to generate virtual currency data with omitting transmission of generation request information from the user terminal 100 to the settlement device 200, as in the case where the country guarantees the mandatory currency power of the virtual currency data.

In this case, assuming that one billion barrels of crude oil buried in the oil field a are divided into 1,000,000 sets, where one set is 1,000 barrels, and serial numbers of 0000001 to 1000000 are attached to the 1,000,000 sets, respectively. Then, the crude oil sets attached with the serial numbers in the oil field a are indicated as oil field a0000001 to oil field a1000000, respectively. If the price of crude oil per barrel at the time of generation of virtual currency data is 100 dollars, the crude oil indicated as the oil field a0000001 is worth 100,000 dollars (= 1000 barrels x 100 dollars). Therefore, it is not necessarily limited to this, 1,000 pieces of virtual currency data having a value of 100 dollars using a lump of crude oil as a basis for credit are generated without any problem, and the credit of the virtual currency data generated in such a manner is extremely strong.

The settlement device 200 generates 1,000 pieces of virtual currency data using "oil field a0000001" as common credit information in the same manner as described in the first embodiment. Then, the common credit information called "oil field a0000001" can be recorded in the credit information in FIG. 10(C) in association with, for example, the serial numbers of the 1,000 pieces of virtual currency data. If it is desired to generate more virtual currency data in the settlement device 200, the administrator or the like of the settlement device 200 can generate a large amount of virtual currency data by generating in sequence virtual currency data having "oil field a0000002", "oil field a0000003", "oil field a0000004", and the like as credit information. Such a buried resource can be used as a basis for credit of the virtual currency data in an unmined state.

In the above-described example, one billion barrels of crude oil are divided using 1,000 barrels as one unit, and a large number of pieces of virtual currency data is generated using the common credit information based on one unit of crude oil. However, it is also possible to generate one piece of virtual currency data from the credit information based on one unit of crude oil, for example, by further reducing one unit of crude oil. In that case, all the credit information assigned to the virtual currency data will be different from each other.

In addition, the above-described asset as a basis for credit of virtual currency data can include a value that does not yet exist in the world but is scheduled to occur in the future. In other words, the asset as a basis for credit information may does not have to exist. Such an example includes power that is scheduled to be generated in the future.

For example, power scheduled to occur in a specific solar photovoltaic power generation panel (for example, panel a) for one month (for example, in July) in a certain year (for example, in 2020) is displayed as "panel a202007". Then, a value scheduled to occur in the panel a for one month can be used an asset that is a basis for credit of virtual currency data. Based on the asset, it is possible to cause the settlement device 200 to generate the virtual currency data.

In this case, the user who is an owner of the panel a may transmit the credit information called "panel a202007" described above from the user terminal 100 to the settlement device 200, for example, simultaneously with the generation request information. The settlement device 200, which has received such generation request information, can generate virtual currency data using the credit information called "panel a202007", and return it to the user terminal 100 from which the generation request information is sent.

On the other hand, similar to the owner of the oil field, a power producer or the like with a mega solar can generate a large amount of his/her own virtual currency data. In that case, credit information included in the virtual currency data is information for specifying power scheduled to be generated from the mega solar in the future.

<<Second Embodiment>>

A settlement system according to a second embodiment is almost the same as the settlement system according to the first embodiment. In particular, configurations of the user terminal 100 and the settlement terminal 300 and processes executed by it are no different from those in the first embodiment. Further, a data structure of virtual currency data is also basically the same as that in the first embodiment. The virtual currency data used in the settlement system according to the second embodiment also includes virtual currency encryption data, which is encrypted data, as in the case of the first embodiment, but, as will be described below, encryption processing performed on the virtual currency encryption data need not to include decryption, unlike the case of the first embodiment. For example, the encryption processing performed on the data shown in FIG. 12(A) to obtain virtual currency encryption data can be conversion such as taking a hash value.

The difference between the second embodiment and the first embodiment is a configuration of the settlement device 200 and a process executed by it. Nevertheless, the configuration of the settlement device 200 according to the second embodiment and the process executed by it are mostly the same as those in the case of the first embodiment.

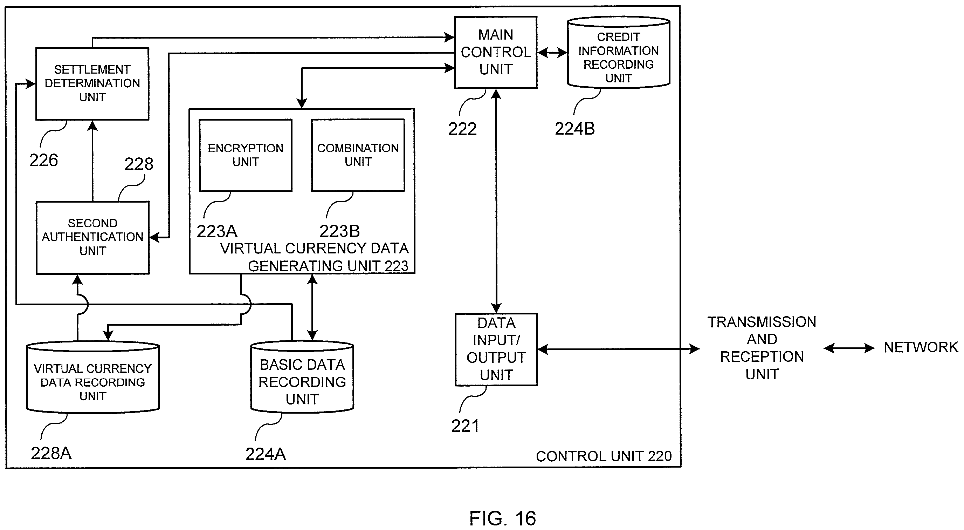

Even in the settlement device 200 according to the second embodiment, as described in the first embodiment, a control unit 220 serving as a functional block is generated therein by execution of a computer program. As shown in FIG. 16, functional blocks generated in the control unit 200 of the second embodiment are substantially the same as those in the first embodiment, and the functions carried out by the same functional blocks are the same as those in the first embodiment except for some functions of the virtual currency data generating unit 223. In addition, the functional blocks generated in the control unit 200 in the second embodiment include a second authentication unit 228 and a virtual currency data recording unit 228A that are not included in the first embodiment, instead of the decryption unit 225 that is included in the first embodiment. This is a main difference between the first embodiment and the second embodiment.

The description will be made with respect to functions of the virtual currency data generating unit 223, the second authentication unit 228, and the virtual currency data recording unit 228A in the settlement device 200 of the second embodiment and processes executed by the former two units.

First, the description will be made with respect to the virtual currency data generating unit 223. The function of the virtual currency data generating unit 223 of the second embodiment and the process executed performed by it are almost the same as those in the first embodiment. The virtual currency data generating unit 223 includes an encryption unit 223A and a combination unit 223B as in the case of the first embodiment. The function of the combination unit 223B and the process performed by it are the same as those in the first embodiment.

The function of the encryption unit 223A of the second embodiment and the process performed by it are basically the same as those in the first embodiment, but the encryption processing performed by the encryption unit 223A of the second embodiment may include decryption later, or may not include decryption.

As in the case of the first embodiment, the encryption unit 223A encrypts the original data shown in FIG. 12(A) to generate virtual currency encryption data. As in the case of the first embodiment, such virtual currency encryption data is sent to the combination unit 223B, the combination unit 223B adds the plaintext data described in the first embodiment to the virtual currency encryption data, and thus virtual currency data is generated. The virtual currency data generating unit 223 of the first embodiment sends the virtual currency data to the main control unit 222 in order for the settlement device 200 to perform a process of sending the virtual currency data from the settlement device 200 to the user terminal 100, but the virtual currency data generating unit 223 of the second embodiment is configured to send the virtual currency data to the virtual currency data recording unit 228A as well as the main control unit 222. In this embodiment, the virtual currency data generating unit 223 sends not only the virtual currency data but also original data including issue subject information, amount information, and credit information shown in FIG. 12(A) that is an origin of the virtual currency encryption data included in the virtual currency data, to the virtual currency data recording unit 228A.

The received virtual currency data is recorded in the virtual currency data recording unit 228A in association with the received original data which serve as the origin of the virtual currency encryption data included in the virtual currency data. Since such a process is repeatedly performed, the virtual currency data recording unit 228A is typically recorded with a plurality of sets of data formed by, in pairs, the virtual currency data with the original data which serve as the origin of the virtual currency encryption data included in the virtual currency data.

The virtual currency data sent to the main control unit 222 is sent from the settlement device 200 to the user terminal 100 as in the case of the first embodiment.

A method of using such virtual currency data is the same as that in the first embodiment, and the virtual currency data is delivered from the user terminal 100 to the settlement terminal 300 and is sent from the settlement terminal 300 to the settlement device 200 together with a settlement terminal ID.

The virtual currency data is sent from the main control unit 222 to the second authentication unit 228 together with the settlement terminal ID as in the case of the first embodiment.

The second authentication unit 228 has a function of confirming whether the received virtual currency data is authentic, or more specifically, whether the virtual currency encryption data included in the received virtual currency data is authentic. This confirmation is actually performed, in the first embodiment, by the fact that the virtual currency encryption data can be decrypted by the decryption unit 225, but the second authentication unit 228 performs the confirmation with a different method.

The second authentication unit 228, which has received the virtual currency data from the main control unit 222, searches for the data recorded in the virtual currency data recording unit 228A, determines that the virtual currency encryption data received from the main control unit 222 is authentic when the same virtual currency data as the virtual currency data received from the main control unit 222 is recorded in the virtual currency data recording unit 228A, and determines that the virtual currency encryption data received from the main control unit 222 is not authentic when the same virtual currency data as the virtual currency data received from the main control unit 222 is not recorded in the virtual currency data recording unit 228A. In a case of using such a determination method, it is preferable to perform an appropriate way, for example, to increase the number of characters (the number of digits) of the virtual currency data so as to avoid duplication in a large number of pieces of virtual currency data generated by a large number of requests from a large number of user terminals 100. Out of the virtual currency data recorded in the virtual currency data recording unit 228A, the data read from the second authentication unit 228 is preferably erased from the virtual currency data recording unit 228A after the payment to the administrator of the settlement terminal 300 using the corresponding virtual currency data is completed, for example.

When determining that the virtual currency data received from the main control unit 222 is authentic, the second authentication unit 228 reads the original data which are recorded in the virtual currency data recording unit 228A in a state of being associated with the same virtual currency data as the virtual currency data received from the main control unit 222. In this state, the second authentication unit 228 has the original data. The original data are data serving as the origin of the virtual currency encryption data when the second authentication unit 228 encrypts the virtual currency encryption data included in the virtual currency data received from the main control unit 222. That is, the state in which the second authentication unit 228 has the original data is the same as the state in which the decryption unit 225 decrypts the virtual currency encryption data included in the virtual currency data received from the main control unit 222 in the first embodiment.

That is, all subsequent processes can be made the same as those in the first embodiment, and thus these processes are applied to the second embodiment. According to the first embodiment, the decryption unit 225 sends the original data including the issue subject information, the amount information, and the credit information that are returned in the form of plaintext, together with the data of the settlement terminal ID, to the settlement determination unit 226, but according to the second embodiment, the second authentication unit 228 sends the issue subject information, the amount information, and the credit information, which are in the form of plaintext, to the settlement determination unit 226 together with the data of the settlement terminal ID. On the other hand, according to the first embodiment, when the virtual currency encryption data cannot be decrypted, the information indicating the purport thereof is sent from the decryption unit 225 to the settlement determination unit 226, but according to the second embodiment, when the same virtual currency data as the virtual currency data sent from the main control unit 222 to the second authentication unit 228 does not exist in the virtual currency data recording unit 228A, the information, which has the same meaning as the information indicating that the decryption cannot be performed in the first embodiment and indicates that the same virtual currency data does not exist in the virtual currency data recording unit 228A, is sent to the settlement determination unit 226.

The subsequent description will not be made.

In the description of the second embodiment, the second authentication unit 228 determines the authenticity of the virtual currency encryption data out of the virtual currency data sent from the main control unit 222 depending on whether the same virtual currency data as the virtual currency data sent from the main control unit 222 exists in the virtual currency data recording unit 228A.

However, such a determination can be made only with respect to the virtual currency encryption data without depending on the entire virtual currency data. Therefore, the main control unit 222 may send only the virtual currency encryption data instead of the entire virtual currency data to the second authentication unit 228 together with the settlement terminal ID. In this case, the virtual currency data generating unit 223 records the virtual currency encryption data instead of the virtual currency data in the virtual currency data recording unit 228A in association with the original data. Then, the second authentication unit 228 determines the authenticity of the virtual currency encryption data out of the virtual currency data sent from the main control unit 222 depending on whether the same virtual currency encryption data as the virtual currency encryption data sent from the main control unit 222 exists in the virtual currency data recording unit 228A.

<<Third Embodiment>>

A settlement system according to a third embodiment is almost the same as the settlement system according to the first embodiment. In particular, configurations of the user terminal 100 and the settlement terminal 300 and processes executed by it are no different from those in the first embodiment. Further, a data structure of virtual currency data is also basically the same as that in the first embodiment. The virtual currency data used in the settlement system according to the third embodiment also includes virtual currency encryption data, which is encrypted data, as in the case of the first embodiment, but, as will be described below, encryption processing performed on the virtual currency encryption data need not to include decryption, unlike the case of the first embodiment. For example, the encryption processing performed on the data shown in FIG. 12(A) to obtain virtual currency encryption data can be conversion such as taking a hash value as in the case of the second embodiment.

The difference between the third embodiment and the first embodiment is a configuration of the settlement device 200 and a process executed by it. Nevertheless, the configuration of the settlement device 200 according to the third embodiment and the process executed by it are mostly the same as those in the case of the first embodiment.

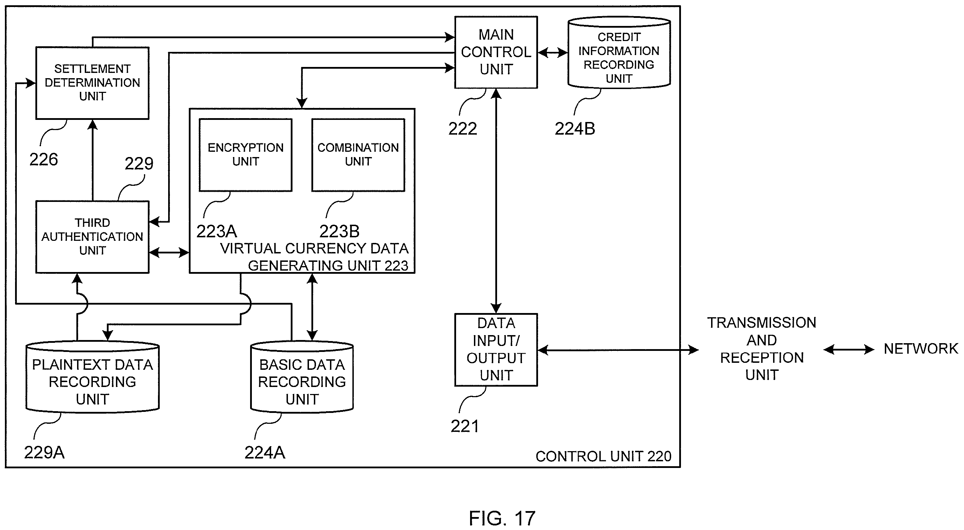

Even in the settlement device 200 according to the third embodiment, as described in the first embodiment, a control unit 220 serving as a functional block is generated therein by execution of a computer program. As shown in FIG. 17, functional blocks generated in the control unit 200 of the third embodiment are substantially the same as those in the first embodiment, and the functions carried out by the same functional blocks are the same as those in the first embodiment except for some functions of the virtual currency data generating unit 223. In addition, the functional blocks generated in the control unit 200 in the third embodiment include a third authentication unit 229 and a plaintext data recording unit 229A that are not included in the first embodiment, instead of the decryption unit 225 that is included in the first embodiment.

The description will be made with respect to functions of the virtual currency data generating unit 223, the third authentication unit 229, and the plaintext data recording unit 229A in the settlement device 200 of the third embodiment and processes executed by the former two units.

First, the description will be made with respect to the virtual currency data generating unit 223. The function of the virtual currency data generating unit 223 of the third embodiment and the process executed performed by it are almost the same as those in the first embodiment. The virtual currency data generating unit 223 includes an encryption unit 223A and a combination unit 223B as in the case of the first embodiment. The function of the combination unit 223B and the process performed by it are the same as those in the first embodiment.

In the third embodiment, the virtual currency data generating unit 223 first generates the original data which has the data structure as shown in FIG. 12(A) and includes the issue subject information, the amount information, and the credit information. As in the first embodiment, such data is encrypted by the encryption unit 223A and converted into virtual currency encryption data. The function of the encryption unit 223A of the third embodiment and the process performed by it are basically the same as those in the first embodiment, but the encryption processing performed by the encryption unit 223A of the third embodiment may include decryption later, or may not include decryption. As in the case of the first embodiment, the virtual currency encryption data is sent to the combination unit 223B, the combination unit 223B adds the plaintext data described in the first embodiment to the virtual currency encryption data, and thus virtual currency data is generated. The virtual currency data generating unit 223 of the first embodiment sends the virtual currency data to the main control unit 222 in order for the settlement device 200 to perform a process of sending the virtual currency data from the settlement device 200 to the user terminal 100, but the same applies to third embodiment.

On the other hand, according to the third embodiment, the data shown in FIG. 12(A) is sent from the virtual currency data generating unit 223 to the plaintext data recording unit 229A and recorded in the plaintext data recording unit 229A. Since such a process is repeatedly performed, the plaintext data recording unit 229A is typically recorded with a large number of pieces of the original data.

The virtual currency data sent to the main control unit 222 is sent from the settlement device 200 to the user terminal 100 as in the case of the first embodiment.

A method of using such virtual currency data is the same as that in the first embodiment, and the virtual currency data is delivered from the user terminal 100 to the settlement terminal 300 and is sent from the settlement terminal 300 to the settlement device 200 together with a settlement terminal ID.

The virtual currency data is sent from the main control unit 222 to the third authentication unit 229 together with the settlement terminal ID as in the case of the first embodiment.

The third authentication unit 229 has a function of confirming whether the received virtual currency data is authentic, or more specifically, whether the virtual currency encryption data included in the received virtual currency data is authentic. This confirmation is actually performed, in the first embodiment, by the fact that the virtual currency encryption data can be decrypted by the decryption unit 225, but the third authentication unit 229 performs the confirmation with a different method.

The third authentication unit 229, which has received the virtual currency data from the main control unit 222, first extracts the serial number information included in the virtual currency data in a form of plaintext. Then, the third authentication unit 229 searches for the issue subject information including the serial number information from the data recorded in the plaintext data recording unit 229A, and reads the original data including the issue subject information from the plaintext data recording unit 229A when finding such issue subject information.

When the serial number information included in the virtual currency data received from the main control unit 222 cannot be found from the data recorded in the plaintext data recording unit 229A, the third authentication unit 229 does not read the original data.

When the original data are read, the third authentication unit 229 sends the original data read from the plaintext data recording unit 229A, to the virtual currency data generating unit 223, and requests the encryption unit 223A to encrypt these types of information. The encryption unit 223A encrypts the requested information and converts it into virtual currency encryption data. The virtual currency encryption data newly created by the virtual currency data generating unit 223 is sent from the virtual currency data generating unit 223 to the third authentication unit 229.

Then, the third authentication unit 229 compares the virtual currency encryption data included in the virtual currency data sent from the main control unit 222 with the virtual currency encryption data newly created by the virtual currency data generating unit 223 in response to the request of the third authentication unit 229. The third authentication unit 229 determines that the virtual currency encryption data received from the main control unit 222 is authentic when both data coincide with each other as a result of comparison, and determines that the virtual currency encryption data received from the main control unit 222 is not authentic when both data do not coincide with each other. Even when the serial number information included in the virtual currency data received from the main control unit 222 is not found from the data recorded in the plaintext data recording unit 229A, the third authentication unit 229 determines that the virtual currency encryption data received from the main control unit 222 is not authentic. As in the case of the first embodiment, the encryption of the encryption unit 223A is always performed by the same method in the third embodiment. If there no falsification of the virtual currency encryption data, which is sent from the main control unit 222, by a malicious third party, since the virtual currency encryption data included in the virtual currency data sent from the main control unit 222 coincides with the virtual currency encryption data newly created by the virtual currency data generating unit 223 in response to the request of the third authentication unit 229, the authenticity of the virtual currency encryption data included in the virtual currency data sent from the main control unit 222 can be determined depending on whether the two pieces of virtual currency encryption data coincide with each other. In the case of such a determination, out of the original data recorded in the plaintext data recording unit 229A, the data read from the third authentication unit 229 is preferably erased from the plaintext data recording unit 229A after the payment to the administrator or the like of the settlement terminal 300 using the corresponding virtual currency data is completed, for example.

When the third authentication unit 229 determines that the virtual currency data received from the main control unit 222 is authentic, the third authentication unit 229 becomes a state having the original data that has already been read from the plaintext data recording unit 229A. The original data including the issue subject information, the amount information, and the credit information is data serving as an origin when the third authentication unit 229 encrypts the virtual currency encryption data included in the virtual currency data received from the main control unit 222. That is, the state in which the third authentication unit 229 has the original data is the same as the state in which the decryption unit 225 decrypts the virtual currency encryption data included in the virtual currency data received from the main control unit 222 in the first embodiment.

That is, as in the case of the second embodiment, all subsequent processes can be made the same as those in the first embodiment, and thus these processes are applied to the third embodiment. As in the case of the first embodiment, according to the third embodiment, the third authentication unit 229 sends all of the original data to the settlement determination unit 226 together with the data of the settlement terminal ID. On the other hand, according to the first embodiment, when the virtual currency encryption data cannot be decrypted, the information indicating the purport thereof is sent from the decryption unit 225 to the settlement determination unit 226, but according to the third embodiment, when it is determined that the virtual currency encryption data included in the virtual currency data sent from the main control unit 222 to the third authentication unit 229 is not authentic, the information, which has the same meaning as the information indicating that the decryption cannot be performed in the first embodiment and indicates the determination that the virtual currency encryption data included in the virtual currency data sent from the main control unit 222 is not authentic, is sent to the settlement determination unit 226.

The subsequent description will not be made.

In the third embodiment, re-encryption is performed on the same original data as the original data serving as an origin of the virtual currency encryption data included in the virtual currency data provided to the user terminal 100, and the authenticity of the virtual currency encryption data included in the virtual currency data provided to the user terminal 100 is determined depending on whether the virtual currency encryption data obtained by the re-encryption coincides with the virtual currency encryption data included in the virtual currency data provided to the user terminal 100.

In order to make this possible, the virtual currency encryption data, which is a determination target of the authenticity and included in the virtual currency data sent from the settlement terminal 300, needs to be decided from the original data that are recorded in a large number of pieces in the plaintext data recording unit 229A of the settlement terminal 300. In the above example, this can be made by using the serial number information as a query, but is not necessarily realized by the serial number information. Each virtual currency data includes identification information that is obtained by encrypting the original data or respective types of data and is in one-to-one correspondence with the virtual currency encryption data included in the virtual currency data and provided to the user terminal 100, the identification information is recorded in the plaintext data recording unit 229A in association with the original data, and thus such identification information can be used as a search query.

<Modification Example 3>

A settlement system according to Modification Example 3 is almost the same as the settlement system according to the third embodiment. The relation between the settlement system of Modification Example 3 and the settlement system of the third embodiment is the same as the relation between the settlement system of Modification Example 1 and the settlement system of the first embodiment.

In the settlement system of the first embodiment, the encryption method using the encryption unit 223A to generate the virtual currency encryption data included in each of the multiple virtual currency data is identically applied to all the cases of generating the virtual currency encryption data. On the other hand, in Modification Example 1, a plurality of encryption methods are executed to obtain virtual currency encryption data.

Similarly, in the settlement system of the third embodiment, the encryption method using the encryption unit 223A to generate the virtual currency encryption data included in each of the multiple virtual currency data is identically applied to all the cases of generating the virtual currency encryption data. On the other hand, in Modification Example 2, a plurality of encryption methods are executed to obtain virtual currency encryption data.

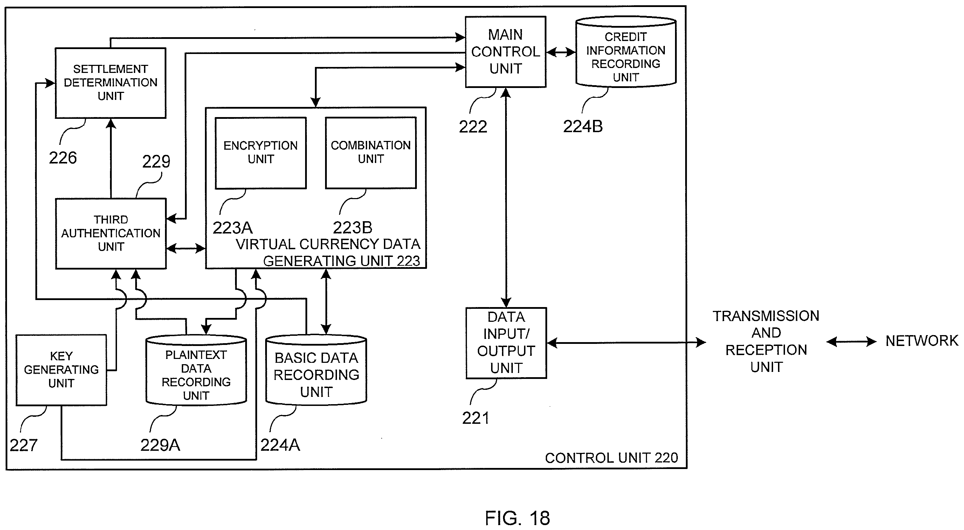

Then, when the encryption unit 223A in Modification Example 3 performs re-encryption of the original data recorded in the plaintext data recording unit 229A, which will be described below, as in Modification Example 1, if the encryption unit 223A cannot know which of the plurality of encryption methods is used to encrypt the virtual currency encryption data for which authenticity is to be determined by the third authentication unit 229, decryption processing cannot be performed. In order to perform the decryption processing, a key generating unit 227 is also provided in a settlement device 200 of Modification Example 3 as in the settlement device 200 of the Modification Example 1 (FIG. 18).

In Modification Example 3, the encryption unit 223A is configured to receive a key necessary for encryption from a key generating unit 227 even in a case of creating the virtual currency encryption data included in the virtual currency data provided to the user terminal 100 by encryption of the original data shown in FIG. 12(A) and even in a case of creating the virtual currency encryption data used by the third authentication unit 229 to determine the authenticity of the virtual currency encryption data included in the virtual currency data sent from the settlement terminal 300 to the settlement device 200 by encryption of the original data provided from the plaintext data recording unit 229A.

In order to enable the key generating unit 227 to generate the key used in both cases, for example, the serial number information may be used as the encryption condition information as in the case of Modification Example 1. Alternatively, as described in Modification Example 1, information other than the serial number information can be used as the encryption condition information. As described in Modification Example 1, the encryption condition information may also be encrypted in plaintext.

## Claims

1.  A data structure of virtual currency data that is data of virtual currency having a monetary value and is used in combination with a settlement device that accepts settlement when the virtual currency data is received from a predetermined device via a network and when predetermined conditions are satisfied, the virtual currency data including virtual currency encryption data which is data obtained by, according to a predetermined encryption method, encryption of plaintext original data which is data including:

    issue subject information including at least information on an issue subject of the virtual currency data; and amount information that is information for specifying a monetary value.

2.  The data structure of virtual currency data according to claim 1, wherein the original data includes plaintext credit information that is information for supporting a credit of virtual currency data.

3.  The data structure of virtual currency data according to claim 2, wherein the credit information is information for specifying a predetermined asset serving as an origin of the credit of the virtual currency data.

4.  The data structure of virtual currency data according to claim 3, wherein the asset is an existing asset.

5.  The data structure of virtual currency data according to claim 4, wherein

the asset is legal tender.

6. The data structure of virtual currency data according to claim 3, wherein the asset is a tangible object.

7. The data structure of virtual currency data according to claim 3, wherein the asset is a buried resource.

8. The data structure of virtual currency data according to claim 3, wherein the asset is power that is scheduled to be generated in future.

9. The data structure of virtual currency data according to claim 1, wherein the issue subject information further includes at least one of:

issuer information that is information for specifying an issuer of the virtual currency data;
authentication information that is information to guarantee authenticity of the virtual currency data, the information being issued by a person having authority to guarantee the authenticity of the virtual currency data;
serial number information that is information unique to each virtual currency data for distinguishing the virtual currency data from another virtual currency data; and
timing information that is information for specifying a timing at which the virtual currency data was issued.

10. The data structure of virtual currency data according to claim 1 or 2, wherein encryption condition information, which is information for specifying a condition when the original date is encrypted, is further attached.

11. The data structure of virtual currency data according to claim 1 or 2, wherein a part of the original data is further attached in an unencrypted state.

12. The data structure of virtual currency data according to claim 2, wherein at least a part of the issue subject information, the amount information, and the credit information is further attached in an unencrypted state.

13. A recording medium recorded with virtual currency data having the data structure of virtual currency data according to any one of claims 1 to 12.

14. A receiving device comprising:

a receiving device receiving means receives data via the network, the recording medium according to claim 13 built therein, wherein
the virtual currency data is recorded on the recording medium after being received by the receiving device receiving means.

15. A transmission device comprising:

a transmission device transmitting means transmits data via the network, the recording medium according to claim 13 built therein, wherein
the virtual currency data is transmitted to the settlement device via the network by the transmission device transmitting means.

16. A settlement device comprising:

a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;
a decryption means that decrypts the virtual currency encryption data included in the virtual currency data received by the settlement device receiving means; and

a settlement means that, when the virtual currency encryption data is capable of being decrypted with the decryption means, accepts settlement of an amount of money specified by the amount information included in the original data obtained by decryption of the virtual currency encryption data with the decryption means.

**17.** A settlement device comprising:

a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;

a copy data recording means that records copy virtual currency encryption data that is data equal to the virtual currency encryption data;

a second authentication means that compares the virtual currency encryption data included in the virtual currency data received by the settlement device receiving means with the copy virtual currency encryption data to determine whether both of the data coincide with each other, and determines that the virtual currency data sent from the predetermined device is authentic when both of the data coincide with each other; and

a settlement means that accepts settlement of an amount of money specified by the amount information when the second authentication means determines that the virtual currency data sent from the predetermined device is authentic.

**18.** A settlement device comprising:

a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;

a plaintext information recording means that records the original data included in one virtual currency encryption data in an encrypted state;

an encryption means that encrypts the original data recorded in the plaintext information recording means using an encryption method equal to the predetermined encryption method used when the original data is encrypted into the virtual currency encryption data;

a third authentication means that compares the virtual currency encryption data included in the virtual currency data received by the settlement device receiving means with the data obtained by encryption of the original data recorded in the plaintext information recording means with the encryption means to determine whether both of the data coincide with each other, and determines that the virtual currency data sent from the predetermined device is authentic when both of the data coincide with each other; and

a settlement means that accepts settlement of an amount of money specified by the amount information when the third authentication means determines that the virtual currency data sent from the predetermined device is authentic.

**19.** A settlement method executed by a settlement device capable of receiving data via a network and including a computer for performing data processing, the settlement method including steps executed by the computer of:

a settlement device receiving step of receiving virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;

a decryption step of decrypting the virtual currency encryption data included in the virtual currency data received in the settlement device receiving step; and

a settlement step of, when the virtual currency encryption data is capable of being decrypted in the decryption step, accepting settlement of an amount of money specified by the amount information included in the original data obtained by decryption of the virtual currency encryption data in the decryption step.

20. A settlement method executed by a settlement device capable of receiving data via a network and including a recording medium and a computer for performing data processing, the settlement method including steps executed by the computer of:

a settlement device receiving step of receiving virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;

a copy data recording step of recording copy virtual currency encryption data that is data equal to the virtual currency encryption data;

a second authentication step of comparing the virtual currency encryption data included in the virtual currency data received in the settlement device receiving step with the copy virtual currency encryption data recorded in the recording medium to determine whether both of the data coincide with each other, and determining that the virtual currency data sent from the predetermined device is authentic when both of the data coincide with each other; and

a settlement step of accepting settlement of an amount of money specified by the amount information when it is determined in the second authentication step that the virtual currency data sent from the predetermined device is authentic.

21. A settlement method executed by a settlement device capable of receiving data via a network and including a recording medium and a computer for performing data processing, the settlement method including steps executed by the computer of:

a settlement device receiving step of receiving virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;

a plaintext information recording step of recording the original data included in one virtual currency encryption data in an encrypted state in the recording medium;

an encryption step of encrypting the original data recorded in the plaintext information recording step using an encryption method equal to the predetermined encryption method used when the original data is encrypted into the virtual currency encryption data;

a third authentication step of comparing the virtual currency encryption data included in the virtual currency data received in the settlement device receiving step with the data obtained by encryption of the original data recorded in the plaintext information recording step in the encryption step to determine whether both of the data coincide with each other, and determining that the virtual currency data sent from the predetermined device is authentic when both of the data coincide with each other; and

a settlement step of accepting settlement of an amount of money specified by the amount information when it is determined in the third authentication step that the virtual currency data sent from the predetermined device is authentic.

22. A computer program for causing a computer capable of receiving data via a network and performing data processing to function as a settlement device, the computer program causing the computer to function as:

a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;

a decryption means that decrypts the virtual currency encryption data included in the virtual currency data received by the settlement device receiving means; and

a settlement means that, when the virtual currency encryption data is capable of being decrypted with the decryption means, accepts settlement of an amount of money specified by the amount information included in the original data obtained by decryption of the virtual currency encryption data with the decryption means.

23. A computer program for causing a computer capable of receiving data via a network and performing data processing to function as a settlement device, the computer program causing the computer to function as:

a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;
a copy data recording means that records copy virtual currency encryption data that is data equal to the virtual currency encryption data;
a second authentication means that compares the virtual currency encryption data included in the virtual currency data received by the settlement device receiving means with the copy virtual currency encryption data to determine whether both of the data coincide with each other, and determines that the virtual currency data sent from the predetermined device is authentic when both of the data coincide with each other; and
a settlement means that accepts settlement of an amount of money specified by the amount information when the second authentication means determines that the virtual currency data sent from the predetermined device is authentic.

24. A computer program for causing a computer capable of receiving data via a network and performing data processing to function as a settlement device, the computer program causing the computer to function as:

a settlement device receiving means that receives virtual currency data, which is data of virtual currency having a monetary value, via a network from a predetermined device for requesting settlement, the virtual currency data including virtual currency encryption data which is data obtained by, according to a predetermined encryption method, encryption of plaintext original data that is data including issue subject information including at least information on an issue subject of the virtual currency data and amount information that is information for specifying a monetary value;
a plaintext information recording means that records the original data included in one virtual currency encryption data in an encrypted state;
an encryption means that encrypts the original data recorded in the plaintext information recording means using an encryption method equal to the predetermined encryption method used when the original data is encrypted into the virtual currency encryption data;
a third authentication means that compares the virtual currency encryption data included in the virtual currency data received by the settlement device receiving means with the data obtained by encryption of the original data recorded in the plaintext information recording means with the encryption means to determine whether both of the data coincide with each other, and determines that the virtual currency data sent from the predetermined device is authentic when both of the data coincide with each other; and
a settlement means that accepts settlement of an amount of money specified by the amount information when the third authentication means determines that the virtual currency data sent from the predetermined device is authentic.

25. A virtual currency data generating device comprising
a currency generating and encrypting means that encrypts, according to a predetermined encryption method, plaintext original data that is data including issue subject information including at least information on an issue subject of virtual currency data and amount information that is information for specifying a monetary value, and thus generates virtual currency encryption data which is data obtained by encryption of the original data,
and thus being capable of generating virtual currency data which includes the virtual currency encryption data and is data of virtual currency having a monetary value.

26. The virtual currency data generating device according to claim 25, comprising:
a generating device transmitting means that transmits the generated virtual currency data to a predetermined device via a network.

**27.** The virtual currency data generating device according to claim 25 or 26, wherein
the original data includes plaintext credit information that is information for supporting a credit of virtual currency data.

**28.** A credit information recording device of virtual currency data, comprising:
a credit information recording means that, in a state where a correspondence relation between each of the virtual currency data generated by the virtual currency data generating device according to claim 27 and credit information for supporting a credit of the virtual currency data is clear, records the credit information.

**29.** The credit information recording device according to claim 28, wherein
the credit information is information for specifying a predetermined asset serving as an origin of the credit of the virtual currency data, and
information on the asset is recorded in the credit information recording means in a state where a correspondence relation between each of the virtual currency data and the asset serving as an origin of the credit of the virtual currency data is clear.

**30.** The credit information recording device according to claim 29, wherein
the asset is a buried resource.

**31.** The credit information recording device according to claim 29, wherein
the asset is power that is scheduled to be generated in future.

**32.** The credit information recording device according to any one of claims 28 to 31, wherein
the credit information recording device is integrated with the virtual currency data generating device according to claim 27.

**33.** A virtual currency data generating device comprising:

a currency generating and encrypting means that encrypts, according to a predetermined encryption method, plaintext original data that is data including issue subject information including at least information on an issue subject of the virtual currency data and amount information that is information for specifying a monetary value, and thus generates virtual currency encryption data which is data obtained by encryption of the original data, and thus being capable of generating virtual currency data which includes the virtual currency encryption data and is data of virtual currency having a monetary value, and
being integrated with the settlement device according to any one of claims 16 to 18.

**34.** A method executed by a virtual currency data generating device including a computer and capable of generating virtual currency data which is data of virtual currency having a monetary value, the method including a step executed by the computer of:

encrypting, according to a predetermined encryption method, plaintext original data that is data including issue subject information including at least information on an issue subject of the virtual currency data and amount information that is information for specifying a monetary value, and thus generating virtual currency encryption data which is data obtained by encryption of the original data,
and thus generating virtual currency data which includes the virtual currency encryption data and is data of virtual currency having a monetary value.

**35.** A computer program of causing a compute to function as a virtual currency data generating device capable of generating virtual currency data which is data of virtual currency having a monetary value, the computer program causing the computer to function as:

a currency generating and encrypting means that encrypts, according to a predetermined encryption method, plaintext original data that is data including issue subject information including at least information on an issue subject of the virtual currency data and amount information that is information for specifying a monetary value, and thus generates virtual currency encryption data which is data obtained by encryption of the original data, and thus, the computer program causing the computer to generate virtual currency data which includes the virtual currency encryption data and is data of virtual currency having a monetary value.

FIG. 1

EP 3 633 574 A2

FIG. 2

FIG. 3

FIG. 4

EP 3 633 574 A2

211   212   213

| CPU | ROM | RAM |
|---|---|---|

HDD  INTERFACE

216

215   214

FIG. 5

FIG. 6

EP 3 633 574 A2

311 312 313

CPU ROM RAM

316

INTERFACE

314

FIG. 7

FIG. 8

| USER TERMINAL | SETTLEMENT DEVICE | SETTLEMENT TERMINAL |
|---|---|---|

START

START GENERATION OF GENERATION REQUEST INFORMATION (S911)

INPUT USER ID AND AMOUNT INFORMATION (S912)

TRANSMIT GENERATION REQUEST INFORMATION (S913) → RECEIVE GENERATION REQUEST INFORMATION (S921)

EXECUTE CREDIT DETERMINATION (S922)

GENERATE VIRTUAL CURRENCY DATA (S923)

RECEIVE VIRTUAL CURRENCY DATA (S914) ← TRANSMIT VIRTUAL CURRENCY DATA (S924)

DELIVER VIRTUAL CURRENCY DATA (S915) → COLLECT VIRTUAL CURRENCY DATA (S931)

RECEIVE VIRTUAL CURRENCY DATA AND SETTLEMENT TERMINAL ID (S925) ← TRANSMIT VIRTUAL CURRENCY DATA AND SETTLEMENT TERMINAL ID (S932)

DECRYPT VIRTUAL CURRENCY ENCRYPTION DATA (S926)

EXECUTE FINAL DETERMINATION (S927)

TRANSMIT DETERMINATION RESULT DATA (S928) → RECEIVE DETERMINATION RESULT DATA (S933)

DISPLAY RESULT OF DETERMINATION (S934)

END

FIG. 9

EP 3 633 574 A2

（A）

START OF SETTLEMENT　　DECISION

USER ID:

AMOUNT OF MONEY (YEN):

（B）

START OF SETTLEMENT　　DECISION

USER ID:　　d2af1apfa

AMOUNT OF MONEY (YEN):　　25,000

（C）

START OF SETTLEMENT　　DECISION

USER ID:　　d2af1apfa

AMOUNT OF MONEY (YEN):　　25,000

CREDIT INFORMATION:　　PRECIOUS METAL a

FIG. 10

（A）

| USER ID | BALANCE OF DEPOSIT ACCOUNT (YEN) |
|---|---|
| kgpi4649a | 2500 |
| LP000ddaa | 0 |
| d2af1apfa | 100000 |
| 220piiai1 | 25000 |
| iaorzkk00 | 300000 |
| . | . |
| . | . |
| . | . |

（B）

| SERIAL NUMBER | CREDIT INFORMATION |
|---|---|
| 000000001 | 2500YEN |
| 000000002 | 10000YEN |
| 000000003 | 100000YEN |
| 000000004 | 25000YEN |
| 000000005 | 300000YEN |
| . | . |
| . | . |
| . | . |

FIG. 11

（A）

| ISSUE SUBJECT INFORMATION | AMOUNT INFORMATION | CREDIT INFORMATION |
|---|---|---|

（B）

| ISSUE SUBJECT INFORMATION | AMOUNT INFORMATION | CREDIT INFORMATION | SERIAL NUMBER INFORMATION | AMOUNT INFORMATION |
|---|---|---|---|---|

FIG. 12

VIRTUAL CURRENCY DATA

25000YEN    SERIAL NUMBER; 000000004

10000YEN    SERIAL NUMBER; 00000112B

4000YEN    SERIAL NUMBER; 00000C2F3

101

FIG. 13

VIRTUAL CURRENCY DATA

25000YEN

SERIAL NUMBER; 000000004

101

FIG. 14

FIG. 15

EP 3 633 574 A2

FIG. 16

FIG. 17

FIG. 18